(19) **Europäisches Patentamt**
**European Patent Office**
**Office européen des brevets**

(11) **EP 2 056 606 A1**

(12) **EUROPEAN PATENT APPLICATION**
published in accordance with Art. 153(4) EPC

(43) Date of publication:
**06.05.2009 Bulletin 2009/19**

(51) Int Cl.:
**H04N 7/32** (2006.01)

(21) Application number: **06781949.0**

(22) Date of filing: **28.07.2006**

(86) International application number:
**PCT/JP2006/315039**

(87) International publication number:
**WO 2008/012918 (31.01.2008 Gazette 2008/05)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Kabushiki Kaisha Toshiba**
**Minato-ku**
**Tokyo 105-8001 (JP)**

(72) Inventors:
• **SHIODERA, Taichiro**
**Minato-ku, Tokyo 105-8001 (JP)**

• **TANIZAWA, Akiyuki**
**Minato-ku, Tokyo 105-8001 (JP)**
• **CHUJOH, Takeshi**
**Minato-ku, Tokyo 105-8001 (JP)**

(74) Representative: **Maury, Richard Philip**
**Marks & Clerk LLP**
**90 Long Acre**
**London**
**WC2E 9RA (GB)**

(54) **IMAGE ENCODING AND DECODING METHOD AND APPARATUS**

(57) An image encoding apparatus includes a first selector selecting a prediction-order to sub-blocks obtained by further dividing pixel-blocks obtained by dividing a frame of an input-image-signal from predetermined prediction-orders, a second selector selecting, from prediction-modes regulating a manner of referring to an encoded-pixel when a first-prediction-signal of each-sub-block is generated with reference to the encoded-pixel, the number of prediction-modes used in prediction of the first-prediction-signal, a third selector selecting prediction-modes the number of which is the selected number from prediction-modes to use the prediction-modes in prediction.of the first-prediction-signal, a generator generating the first-prediction-signal in the selected prediction order by using the selected prediction-modes the number of which is the selected number to generate a second-prediction-signal corresponding to the pixel-block, and an encoder encoding a prediction-residual-error-signal expressing a difference between an image-signal of the pixelblock and the second-prediction-signal to generate encoded data obtained by the prediction-encoding.

F I G. 1

EP 2 056 606 A1

**Description**

Technical Field

The present invention relates to a method and apparatus for encoding and decoding a moving or a still image.

Background Art

In recent years, an image encoding method the encoding efficiency of which is considerably improved is recommended as ITU-T Rec.H.264 and ISO/IEC 14496-10 (to be referred to as H.264 hereinafter) in cooperation with ITU-T and ISO/IEC. In an encoding scheme such as ISO/IEC MPEG-1, 2, and 4, ITU-T H.261, and H.263, intra-frame prediction in a frequency region (DCT coefficient) after orthogonal transformation is performed to reduce a code amount of a transformation coefficient. In contrast to this, directional prediction (see Greg Conklin, "New Intra Prediction Modes", ITU-T Q.6/SG16 VCEG, VCEG-N54, Sept. 2001) is employed to realize prediction efficiency higher than that of intra-frame prediction in ISO/IEC MPEG-1, 2 and 4.

In an H. 264 high profile, intra-frame prediction schemes of three types are regulated to a luminance signal, one of them can be selected in a macroblock (16×16 pixelblock). The intra-frame prediction schemes of the three types are called 4×4 pixel prediction, 8x8 pixel prediction, and 16×16 pixel prediction, respectively.

In the 16x16 pixel prediction, four prediction modes called vertical prediction, horizontal prediction, DC prediction, and plane prediction are regulated. In the four prediction modes, of a local decoding signal obtained before a deblocking filter is applied, a pixel value of a macroblock around a macroblock to be encoded is used as a reference pixel value to perform prediction.

In the 4x4 pixel prediction, a macroblock is divided into 4×4 pixelblocks (sub-blocks), any one of nine prediction modes is selected to each of the 4×4 pixelblocks. Of the nine prediction modes, eight modes except for the DC prediction (mode 2) which performs prediction by an average pixel value of available reference pixels have prediction directions arranged at intervals of 22.5°, respectively. Extrapolation is performed in a prediction direction by using the reference pixel to generate a prediction signal.

In the 8x8 pixel prediction, a macroblock is divided into four 8x8 pixelblocks (sub-blocks), and any one of the nine prediction modes is selected to each of the 8×8 pixelblocks. The prediction mode is designed in the same framework as that of the 4×4 pixel prediction. A process of performing three-tap filtering to encoded reference pixels and planarizing reference pixels to be used in prediction to average encoding distortion is added.

In Kenneth K. C. Lee et al. "Spatial Domain Contribution to a High Compression Efficiency System" IWAIT2006, Jun. 2006, a method which selects two prediction modes from the nine prediction mode candidates and calculates averages to prediction signals generated according to the two selected prediction modes in units of pixels to generate a prediction signal is disclosed. According to this method, high prediction efficiency is realized even for a complex texture which is not assumed in normal 4x4 pixel prediction or normal 8×8 pixel prediction.

According to Kenneth K. C. Lee et al. "Spatial Domain Contribution to a High Compression Efficiency System" IWAIT 2006, Jun. 2006, a prediction order of sub-blocks (4×4 pixelblocks or 8×8 pixelblocks) in a macroblock is uniformly fixed. For example, in the prediction of 4x4 pixelblocks, the 8x8 pixelblocks each obtained by dividing the macroblock by four are considered, and extrapolating prediction is sequentially performed to the 4×4 pixelblocks each obtained by dividing the 8x8 pixelblock. The processes in units of 8×8 pixelblocks are repeated four times to complete predictive encoding of sixteen 4×4 pixelblocks. On the other hand, in the prediction of the 8×8 pixelblocks, extrapolating prediction is sequentially performed to the 8×8 pixelblocks obtained by dividing the macroblock by four.

Disclosure of Invention

Since the H. 264 intra-frame prediction is based on extrapolating prediction, only left and upper pixels can be referred to with respect to a sub-block in a macroblock. Therefore, when correlation between the luminance of the pixels of the sub-block and the luminance of the left and upper pixels is low, a prediction residual error increases, and encoding efficiency consequently decreases.

In Kenneth K. C. Lee et al. "Spatial Domain Contribution to a High Compression Efficiency System" IWAIT 2006, Jun. 2006, two prediction modes are always used. More specifically, even though a sufficient result can be obtained by using a single prediction mode, prediction is performed by using the two prediction modes. For this reason, the system has a room for improvement in encoding efficiency.

It is an object of the present invention to provide a method and apparatus for image encoding having high encoding efficiency and decoding.

According to one aspect of the present invention, there is provided an image encoding apparatus comprising: a first selector which selects a prediction order to a plurality of sub-blocks obtained by further dividing a plurality of pixelblocks obtained by dividing a frame of an input image signal from a plurality of predetermined prediction orders; a second selector which selects, from a plurality of prediction modes which regulate a manner of referring to an encoded pixel when a first prediction signal of each sub-block is generated for the encoded pixel, the number of prediction modes used in prediction of the first prediction signal; a third selector which selects prediction modes of the number selected prediction modes from the plurality of prediction modes to use in prediction of the first prediction signal; a generator which generates the first prediction signal in the selected prediction order by using the number of selected prediction modes to generate a second prediction signal corresponding to the pixelblock; and an encoder which encodes a prediction residual error signal expressing a difference between an image signal of the pixelblock and the second prediction signal to generate encoded data obtained by the predictive encoding.

According to another aspect of the present invention, there is provided an image decoding apparatus comprising: a first selector which selects a prediction order of a plurality of sub-blocks obtained by dividing the pixelblock from a plurality of predetermined prediction orders; a second selector which selects, from a plurality of prediction modes which regulate a manner of referring to an encoded pixel when a first prediction signal of each sub-block is generated for a decoded pixel, a number of prediction modes used in prediction of the first prediction signal; a third selector which selects prediction modes of the number of selected prediction modes from the plurality of prediction modes to use in prediction of the first prediction signal; a generator which generates the first prediction signal in the selected prediction order by using the number of selected prediction modes to generate a second prediction signal corresponding to the pixelblock; and a generator which generates a decoded image signal by using the second prediction signal.

According to still another aspect of the present invention, there is provided a computer readable storage medium in which a program which causes a computer to perform at least one of the image encoding process and the image decoding process is stored.

Brief Description of Drawings

FIG. 1 is a block diagram showing an image encoding apparatus according to an embodiment.
FIG. 2A is a diagram showing an encoding target block and an encoded block in an encoding target frame.
FIG. 2B is a diagram showing a block size of a macroblock.
FIG. 3A is a diagram showing an 8×8 pixelblock.
FIG. 3B is a diagram showing a 4×4 pixelblock.
FIG. 3C is a diagram showing 8x8/4x4 pixelblocks.
FIG. 4 is a block diagram showing details of a predictor in FIG. 1.
FIG. 5 is a block diagram showing details of a prediction signal generator in FIG. 1.
FIG. 6A is a diagram showing 8x8 pixelblocks and block indexes.
FIG. 6B is a diagram showing a prediction order by sequential prediction to the blocks in FIG. 6A.
FIG. 6C is a diagram showing a change of a prediction order by extrapolation/interpolation prediction to the blocks in FIG. 6A.
FIG. 6D is a diagram showing a change of another prediction order to the blocks in FIG. 6A.
FIG. 7A is a diagram showing 4x4 pixelblocks and block indexes.
FIG. 7B is a diagram showing a prediction order by sequential prediction to the blocks in FIG. 7A.
FIG. 7C is a diagram showing a change of a prediction order by extrapolating/interpolating prediction to the blocks in FIG. 7A.
FIG. 7D is a diagram showing a change of another prediction order to the blocks in FIG. 7A.
FIG. 8 is a diagram for explaining a prediction order table used in a prediction order switch.
FIG. 9A is a diagram showing a prediction mode of raster block prediction in a unidirectional predictor.
FIG. 9B is a diagram showing a relationship between a prediction pixel and a reference pixel in 4×4 pixel prediction.
FIG. 9C is a diagram for explaining a prediction signal generating method in mode 0.
FIG. 9D is a diagram for explaining a prediction signal generating method in mod 4.
FIG. 10 is a diagram showing names of prediction modes and mode indexes in a unidirectional predictor.
FIG. 11 is a diagram showing names of prediction modes and mode indexes in a bidirectional predictor.
FIG. 12A is a conceptual diagram of vertical/horizontal prediction (mode 01) in 4×4 pixel prediction.
FIG. 12B is a conceptual diagram of a vertical/diagonal-down-right prediction (mode 04) in the 4×4 pixel prediction.
FIG. 13A is a diagram for explaining an extrapolation/interpolation block prediction to 8×8 pixelblocks.
FIG. 13B is a diagram for explaining extrapolation/interpolation block prediction to 4×4 pixelblocks.
FIG. 14A is a diagram showing a positional relationship between a reference pixel and a prediction pixel in extrapolation block prediction.
FIG. 14B is a diagram showing a relationship between an interpolation block (1) and a reference pixel in 4×4 pixel prediction.

FIG. 14C is a diagram showing a relationship between an interpolation block (2) and a reference pixel in the $4\times4$ pixel prediction.

FIG. 14D is a diagram showing a relationship between an interpolation block (3) and a reference pixel in the $4\times4$ pixel prediction.

FIG. 15A is a diagram for explaining a prediction signal generating method obtained when vertical prediction (mode 0) is selected in extrapolation block prediction.

FIG. 15B is a diagram for explaining a prediction signal generating method obtained when diagonal-down-right prediction (mode 4) is selected in the extrapolation block prediction.

FIG. 16 is a diagram showing a prediction mode of interpolation block prediction in a unidirectional predictor.

FIG. 17 is a diagram showing a prediction mode of unidirectional prediction performed in the interpolation block prediction in the unidirectional predictor.

FIG. 18A is a diagram showing a prediction mode which can be selected to an interpolation block (1) in the unidirectional predictor.

FIG. 18B is a diagram showing a prediction mode which can be selected to an interpolation block (2) in the unidirectional predictor.

FIG. 18C is a diagram showing a prediction mode which can be selected to an interpolation block (3) in the unidirectional predictor.

FIG. 18D is a diagram showing prediction modes which can be selected to an interpolation block (4) in the unidirectional predictor.

FIG. 19A is a diagram for explaining a prediction signal generating method for the interpolation block (1) in inverse-vertical prediction (mode 9).

FIG. 19B is a diagram for explaining a prediction signal generating method for the interpolation block (2) in inverse-vertical prediction (mode 9).

FIG. 20A is a diagram for explaining a prediction signal generating method for the interpolation block (1) in inverse-horizontal prediction (mode 10).

FIG. 20B is a diagram for explaining a prediction signal generating method for the interpolation block (2) in inverse-horizontal prediction (mode 10).

FIG. 21A is a diagram for explaining a prediction signal generating method for the interpolation block (1) in diagonal-left prediction (mode 12).

FIG. 21B is a diagram for explaining a prediction signal generating method for the interpolation block (1) in diagonal-left prediction (mode 12).

FIG. 21C is a diagram for explaining a prediction signal generating method for the interpolation block (2) in diagonal-left prediction (mode 12).

FIG. 22 is a diagram showing names of prediction modes and mode indexes in interpolation block prediction in a bidirectional predictor.

FIG. 23 is a flow chart showing a processing procedure of image encoding according to an embodiment.

FIG. 24 is a flow chart showing a part of the processing procedure in FIG. 23.

FIG. 25 is a diagram showing an example of a syntax structure used in an image encoder.

FIG. 26 is a diagram showing an example of a data structure of a macroblock layer syntax.

FIG. 27 is a diagram showing an example of a data structure of macroblock prediction syntax.

FIG. 28 is a diagram for explaining an equation for transforming a prediction mode into an encoding index.

FIG. 29 is a diagram for explaining a table for transforming a prediction mode into an encoding index.

FIG. 30 is a diagram showing names of prediction modes which can be used to the interpolation blocks (1), (2), and (3) and the extrapolation block (4) and mode indexes.

FIG. 31 is a diagram showing another example of the data structure of the macroblock prediction syntax.

FIG. 32 is a diagram showing a method of deriving a prediction mode.

FIG. 33 is a diagram showing block positions where a prediction mode is referred to in prediction.

FIG. 34 is a diagram showing another example of the data structure of the macroblock prediction syntax.

FIG. 35 is a diagram showing an example of a data structure of a sequence parameter set syntax.

FIG. 36 is a diagram showing an example of a data structure of a picture parameter set syntax.

FIG. 37 is a diagram showing an example of a data structure of a slice header syntax.

FIG. 38 is a diagram showing an example of the data structure of the macroblock layer syntax.

FIG. 39 is a diagram showing still another example of the macroblock prediction syntax.

FIG. 40 is a block diagram showing an image decoding apparatus according to an embodiment.

FIG. 41 is a block diagram showing details of the prediction signal generator in FIG. 40.

FIG. 42 is a diagram for explaining an equation for inversely transforming a decoded index into a prediction mode.

FIG. 43 is a diagram for explaining a table for inversely transforming a decoded index into a prediction mode.

FIG. 44A is a diagram for explaining block positions where a prediction mode is referred to in prediction of the interpolation block (1).

FIG. 44B is a diagram for explaining block positions where a prediction mode is referred to in prediction of the interpolation block (2).

FIG. 44C is a diagram for explaining block positions where a prediction mode is referred to in prediction of the interpolation block (3).

FIG. 44D is a diagram for explaining block positions where a prediction mode is referred to in prediction of the interpolation block (4).

Best Mode for Carrying Out the Invention

An embodiment of the present invention will be described below with reference to the drawings.

<About Image Encoding Apparatus>

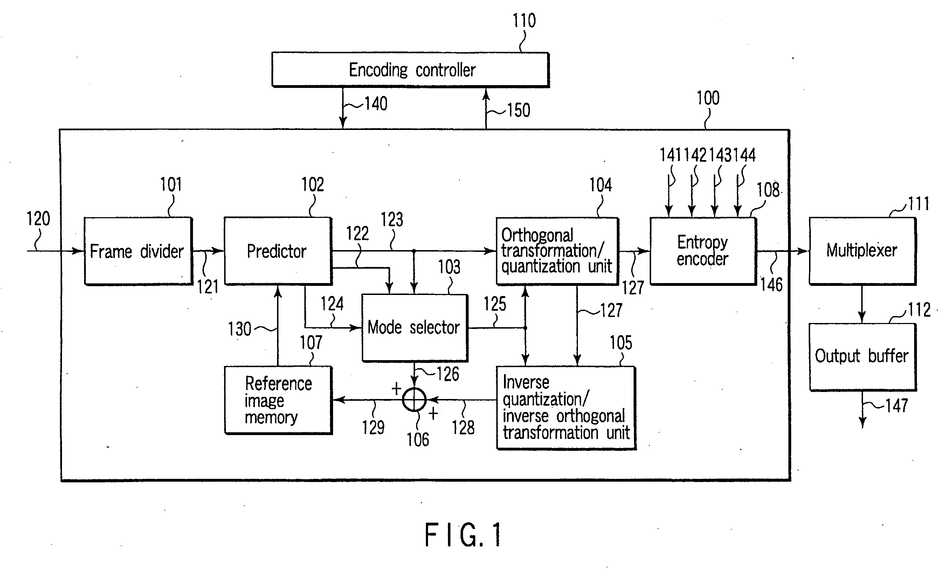

As shown in FIG. 1, in an image encoding apparatus according to an embodiment of the invention, an input image signal 120 of a moving image or a still image is input to an image encoder 100. The image encoder 100 has a frame divider 101, a predictor 102, a mode selector 103, an orthogonal transformation/quantization unit 104, an inverse quantization/inverse orthogonal transformation unit 105, an adder 106, a reference image memory 107, and an entropy encoder 108.

An encoding controller 110 gives encoding control information 140 to the image encoder 100 to control a whole of an encoding process of the image encoder 100 and properly receives feedback information 150 from the image encoder 100. The encoding control information 140 includes prediction mode index information (described later), block size switching information, prediction order switching information, prediction mode number switching information, quantization parameter information, and the like. The quantization parameter information includes a quantization width (quantization step size), a quantization matrix, and the like. The feedback information 150 includes generated coding bits amount information in the image encoder 100 required to determine quantization parameters.

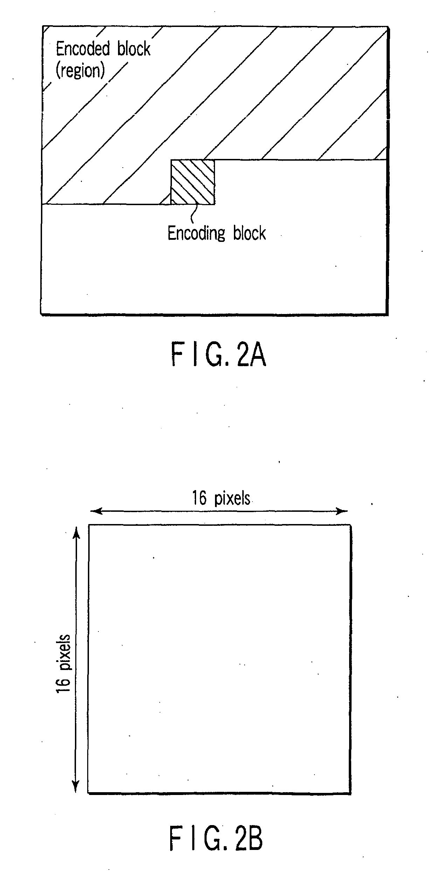

In the image encoder 100, the input image signal 120 is input to the frame divider 101. In the frame divider 101, an encoding target frame of the input image signal 120 is divided into a plurality of pixelblocks to generate a block image signal 121. For example, an encoding target frame in FIG. 2A is divided into a plurality of blocks each having a $16\times16$ pixel/block size as shown in FIG. 2B. The block shown in FIG. 2B is called a macroblock and is a basic processing unit for encoding. More specifically, encoding is performed in unit of a macroblock.

The block image signal 121 output from the frame divider 101 is subjected to intra-frame prediction by the predictor 102 first. The intra-frame prediction is a scheme which performs prediction closed in a frame as has been known. The predictor 102 uses a coded pixel as a reference pixel to predict an encoding target block, thereby generating a prediction signal 122 in unit of a macroblock.

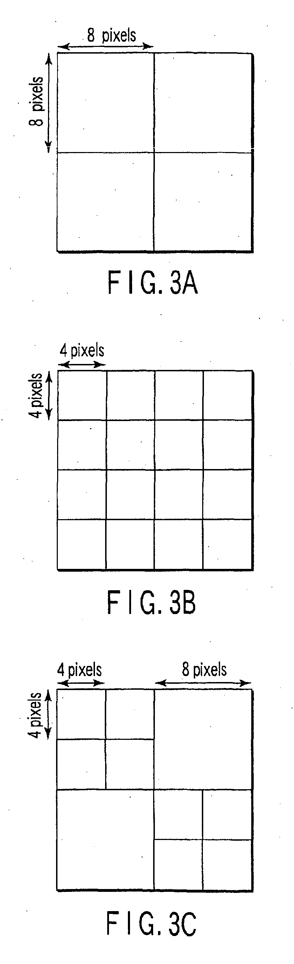

In the predictor 102, a plurality of prediction modes for intra-frame prediction are prepared, and prediction is performed according to all selectable prediction modes. The predictor 102 may have a prediction mode which performs intra-prediction of H. 264, i.e., $8\times8$ pixel prediction in FIG. 3A, $4\times4$ pixel prediction in FIG. 3B, or $8\times8/4\times4$ pixel prediction in FIG. 3C (8x8 pixel prediction and 4x4 pixel prediction are mixed with each other in a macroblock). In the intra-prediction of H. 264, next prediction cannot be performed without forming a local decoded image in the macroblock. In this case, orthogonal transformation/quantization and inverse quantization/inverse orthogonal transformation may be performed in the predictor 102.

In the $8\times8$ pixel prediction and $4\times4$ pixel prediction, each macroblock is divided into sub-blocks constituted by 8x8 pixelblocks and $4\times4$ pixelblocks. In this case, the prediction mode regulates a manner of referring to encoded pixels used when prediction signals of the sub-blocks are generated. The shape (including a size) of the sub-block is not limited to a specific shape. For example, shapes of 16x8 pixels, 8x16 pixels, $8\times4$ pixels, and $4\times8$ pixels may be used. Therefore, $8\times4$ pixel prediction and 2x2 pixel prediction can be realized by the same framework as described above.

When a block size of the sub-block is reduced, i.e., when the number of divided macroblocks increases, an amount of code used when block size switching information (described later) is encoded increases. However, since intra-frame prediction having higher prediction efficiency can be performed, a residual error is reduced. Therefore, in consideration of a balance of the amount of coding bits for transformation coefficient information (described later) and a local decoding signal, a block size may be selected. The same process as described above may be performed to a pixel region having an arbitrary shape generated by a region dividing method.

In the predictor 102, a prediction residual error signal 123 is generated by subtracting the prediction signal 122 from the prediction signal 122 and the block image signal 121. The prediction residual error signal 123 is input to the orthogonal transformation/quantization unit 104 and the mode selector 103. In the orthogonal transformation/quantization unit 104, orthogonal transformation is performed to the prediction residual error signal 123, and the transformation coefficient obtained by the orthogonal transformation is quantized to generate quantization transformation coefficient information 127.

With respect to the shape of a transformation/quantization block which is a processing unit in the orthogonal transformation/quantization unit 104, shapes of 8x8 pixels, 4x4 pixels, 16x8 pixels, 8×16 pixels, 8x4 pixels, and 4×8 pixels can be selected. Alternatively, different shapes are given to the transformation/quantization blocks in one macroblock. For example, 8x8 pixelblocks and 4x4 pixelblocks may be mixed in a macroblock as shown in FIG. 3C.

In the mode selector 103, on the basis of prediction mode information 124 (Hereafter, prediction mode index information, block size switching information, prediction order switching information, and prediction mode number switching information are called to be prediction mode information generically) such as prediction mode index information, block size switching information, prediction order switching information, and the prediction mode number switching information related to a prediction mode to be input through the prediction residual error signal 123 and the predictor 102, an encoding cost is calculated. On the basis of this, an optimum prediction mode is selected.

More specifically, when the prediction mode information 124 is represented by OH, and a sum of absolute values of prediction residual error signals is represented by SAD, the mode selector 103 selects a prediction mode which gives the minimum value of an encoding cost K calculated by the following equation as an optimum mode.

[Equation 1]

$$K = SAD + \lambda \times OH \qquad\qquad (1)$$

where $\lambda$ denotes a constant which is determined on the basis of a value of a quantization parameter.

As another example of a cost calculation in the mode selector 103, only the prediction mode information OH or only the sum of absolute values SAD of the prediction residual error signals may be used. A value obtained by Hadamard-transforming or approximating the prediction mode information or the prediction residual error signal may be used. A cost function may be formed by using a quantization width and a quantization parameter.

As still another example of the cost calculation, a virtual encoder is prepared, and an amount of code obtained by actually encoding the prediction residual error signal 123 generated in each prediction mode and a square error between a decoded image signal 130 obtained by locally decoding encoded data and a block image signal 121 may be used. In this case, a prediction mode which gives the minimum value of an encoding cost J calculated by the following equation is selected as an optimum mode:

[Equation 2]

$$J = D + \lambda \times R \qquad\qquad (2)$$

where D denotes an encoding distortion expressing the square error between the block image signal 121 and the decoded image signal 130. On the other hand, R denotes an amount of code estimated by virtual encoding.

When the encoding cost J in Equation (2) is used, virtual encoding and local decoding (inverse quantization and inverse orthogonal transformation) are necessary in each prediction mode. For this reason, an amount of processing or a circuit scale increases. However, since the cost J reflects an accurate amount of code and accurate encoding distortion, a more optimum prediction mode can be selected. As a result, higher encoding efficiency can be obtained. In Equation (2), the encoding distortion D and the amount of coding bits R are used in calculation of the encoding cost J. However, the encoding cost J may be calculated by using any one of D and R. A cost function may be formed by using a value obtained by approximating D and R.

From the mode selector 103, optimum prediction mode information 125 expressing a selected prediction mode and a prediction signal 126 corresponding to the selected prediction mode are output. The optimum prediction mode information 125 is input to the orthogonal transformation/quantization unit 104 together with the prediction residual error signal 123 from the predictor 102. The orthogonal transformation/quantization unit 104 performs orthogonal transformation, for example, discrete cosine transformation (DCT) to the prediction residual error signal 123 with reference to the optimum prediction mode information 125. As the orthogonal transformation, wavelet transformation, independent component analysis, or the like may be used. In the orthogonal transformation/quantization unit 104, a transformation coefficient obtained by the orthogonal transformation is quantized to generate the quantization transformation coefficient information 127. In this case, a quantization parameter such as a quantization width required for quantization in the orthogonal transformation/quantization unit 104 is designated by the quantization parameter information included in the encoding control information 140 from the encoding controller 110.

The quantization transformation coefficient information 127 is input to the entropy encoder 108 together with information related to prediction such as prediction mode index information 141, block size switching information 142, prediction order switching information 143, prediction mode number switching information 144, and a quantization parameter which are included in the encoding control information 140. The entropy encoder 108 performs entropy encoding such as Huffman encoding, Golomb encoding, or arithmetic encoding to the quantization transformation coefficient information 127 and the information related to prediction to generate encoded data 146. The encoded data 146 is multiplexed by a multiplexer 111 and transmitted through an output buffer 112 as an encoding bit stream 147.

The quantization transformation coefficient information 127 is also input to the inverse quantization/inverse orthogonal transformation unit 105. The inverse quantization/inverse orthogonal transformation unit 105 inversely quantizes the quantization transformation coefficient information 127 according to quantization parameter information from the encoding controller 110 and performs inverse orthogonal transformation such as inverse discrete cosine transformation (IDCT) to a transformation coefficient obtained by the inverse quantization, thereby generating a prediction residual error signal 128 equivalent to the prediction residual error signal 123 output from the predictor 102.

The prediction residual error signal 128 generated by the inverse quantization/inverse orthogonal transformation unit 105 is added to the prediction signal 126 from the mode selector 103 in the adder 106 to generate a local decoding signal 129. The local decoding signal 129 is accumulated in the reference image memory 130. The local decoding signal accumulated in the reference image memory 107 is read as the reference image signal 130 and referred to when the prediction residual error signal 123 is generated by the predictor 102.

An encoding loop (in FIG. 1, predictor 102 → orthogonal transformation/quantization unit 104 → inverse quantization/inverse orthogonal transformation unit 105 → reference image memory 130 → predictor 102) is made when processing to all selectable prediction modes is finished in an encoding target block. When the processing of the encoding loop is finished to a certain encoding target block, the block image signal 121 of the next encoding target block is input to the predictor 101 to perform encoding again.

The encoding controller 110 performs control of entire encoding such as rate control by feedback control of an amount of generated coding bits or quantization parameter control, encoding mode control, and control of the predictor. The image encoding apparatus in FIG. 1 is realized by hardware such as an LSI chip or realized by execution of an image encoding program in a computer.

<About Prediction Unit 102>

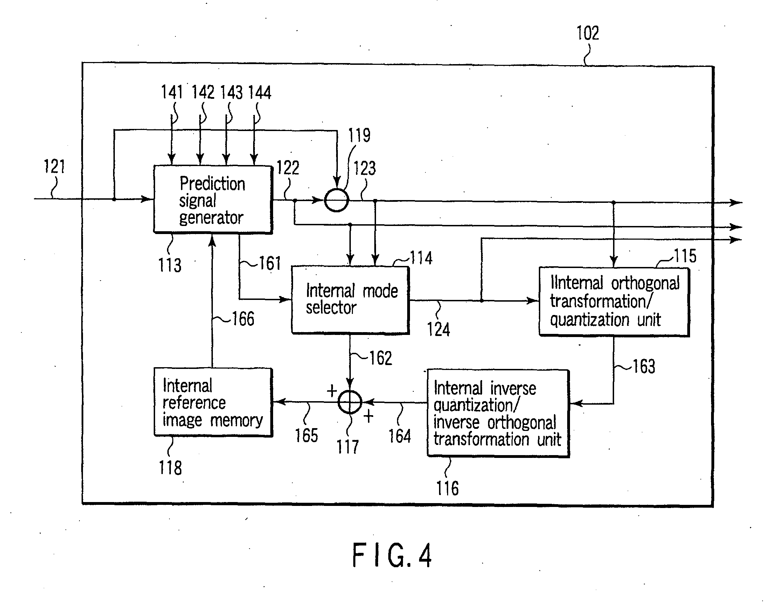

The predictor 102 will be described below by using FIG. 4. The predictor 102 has a prediction signal generator 113 which generates a prediction signal and further has an internal mode selector 114, an internal orthogonal transformation/quantization unit 115, an internal inverse quantization/inverse orthogonal transformation unit 116, and an internal reference image memory 118 to perform prediction in units of a plurality of small pixelblocks (called sub-blocks) obtained by further dividing a macroblock.

When the block image signal 121 is input to the predictor 102, the prediction signal 122 obtained by unidirectional prediction (described later) or bidirectional prediction (described later) is generated by the prediction signal generator 113. In this case, prediction mode information including the prediction mode index information 141, the block size switching information 142, the prediction order switching information 143, and the prediction mode number switching information 144 is transmitted from the encoding controller 110 to the prediction signal generator 113. The encoding controller 110 transmits a plurality of prediction modes to the prediction signal generator 113 to cause the prediction signal generator 113 to perform prediction in the plurality of prediction modes. The prediction signal generator 113 generates, in addition to the prediction signal 122 obtained by the respective prediction modes, prediction mode information 161 corresponding to the prediction signal 122.

A subtractor 119 subtracts the prediction signal 114 from the block image signal 121 to generate the prediction residual error signal 123. The internal mode elector 114 selects a prediction mode on the basis of the prediction mode information 161 (including the prediction mode index information 141, the block size switching information 142, the prediction order switching information 143, and the prediction mode number switching information 144) transmitted through the prediction signal generator 113 and the prediction residual error signal 123 to output the prediction mode information 124 representing the selected· prediction mode.

The prediction residual error signal 123 and the prediction mode information 124 outputted from the internal mode selector 114 are input to the internal orthogonal transformation/quantization unit 115. In the internal orthogonal transformation/quantization unit 115, orthogonal transformation, for example, DCT is performed to the prediction residual error signal 123 with reference to the prediction mode information 124. As the orthogonal transformation, wavelet transformation, independent component analysis, or the like may be used. In the internal orthogonal transformation/quantization unit 115, a transformation coefficient obtained by orthogonal transformation is quantized to generate quantization transformation coefficient information 163. In this case, a quantization parameter such as a quantization width required for quantization in the internal orthogonal transformation/quantization unit 115 is designated by the quantization parameter information included in the encoding control information 140 from the encoding controller 110.

The quantization transformation coefficient information 163 is input to the internal inverse quantization/inverse orthogonal transformation unit 116. The internal inverse quantization/inverse orthogonal transformation unit 116 inversely quantizes the quantization transformation coefficient information 163 according to the quantization parameter information from the encoding controller 110 and performs inverse orthogonal transformation such as IDCT to a transformation coefficient obtained by the inverse quantization, thereby generating a prediction residual error signal 164 equivalent to the prediction residual error signal 123.

The prediction residual error signal 164 generated by the internal inverse quantization/inverse orthogonal transformation unit 116 is added to a prediction signal 162 from the internal mode selector 114 in an adder 117 to generate an internal decoding signal 165. The internal decoding signal 165 is accumulated in the internal reference image memory 118.

A local decoding signal accumulated in the internal reference image memory 118 is read as an internal reference image signal 166 and referred to when a prediction residual error signal is generated by the prediction signal generator 113. Upon completion of prediction in all the sub-blocks in the predictor 102, the prediction signal 122, the prediction residual error signal 123, and the prediction mode information 124 corresponding to the macroblock are output outside the predictor 102.

<About Prediction Signal Generating Unit 113>

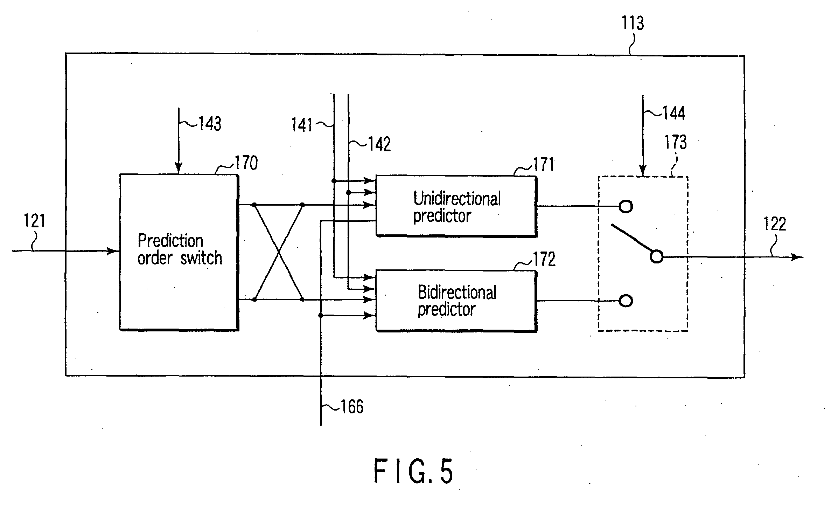

The prediction signal generator 113 will be described below with reference to FIG. 5. FIG. 5 shows only a part related to generation of the prediction signal 122 in the prediction signal generator 113. In FIG. 5, a prediction order switch 170 switches prediction orders of sub-blocks in the macroblock on the basis of the prediction order switching information 143 with respect to the block image signal 121. More specifically, the prediction order switch 170 selects a prediction order to a plurality of sub-blocks obtained by dividing a pixelblock (macroblock) from a plurality of predetermined prediction orders. Block image signals the prediction orders of which are switched by the prediction order switch 170 are input to a unidirectional predictor 171 and a bidirectional predictor 172.

The unidirectional predictor 171 and the bidirectional predictor 172 predict a macroblock with reference to encoded pixels according to the prediction order switched and selected by the prediction order switch 170 and the prediction modes respectively selected to generate a prediction signal corresponding to the macroblock.

More specifically, the unidirectional predictor 171 selects one prediction mode from the plurality of prepared prediction modes on the basis of the prediction mode index information 141. The unidirectional predictor 171 generates prediction signals with reference to the internal reference image signal 166 according to the prediction mode selected as described above and the block size switching information 142. The bidirectional predictor 172 selects two kinds of prediction modes from the plurality of prepared prediction modes on the basis of the prediction mode index information 141. The bidirectional predictor 172 generates prediction signals with reference to the internal reference image signal 166 according to the two kinds of prediction modes selected as described above and the block size switching information 142. The prediction signals output from the unidirectional predictor 171 and the bidirectional predictor 172 are input to a prediction mode number switch 173.

The prediction mode number switch 173 is controlled according to the prediction mode number switching information 144 to select any one of the prediction signal generated by the unidirectional predictor 171 and the prediction signal generated by the bidirectional predictor 172, thereby outputting a selected prediction signal 122. In other words, the prediction mode number switch 173 selects the number of usable prediction modes from a plurality of predetermined prediction modes.

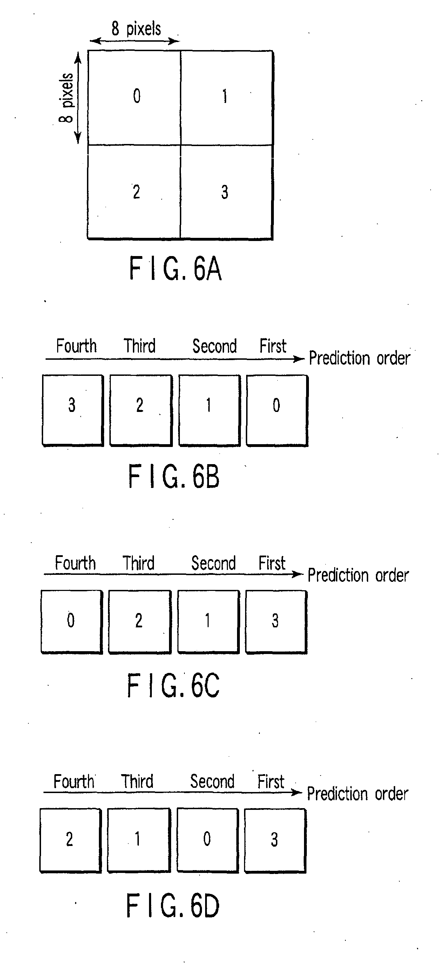

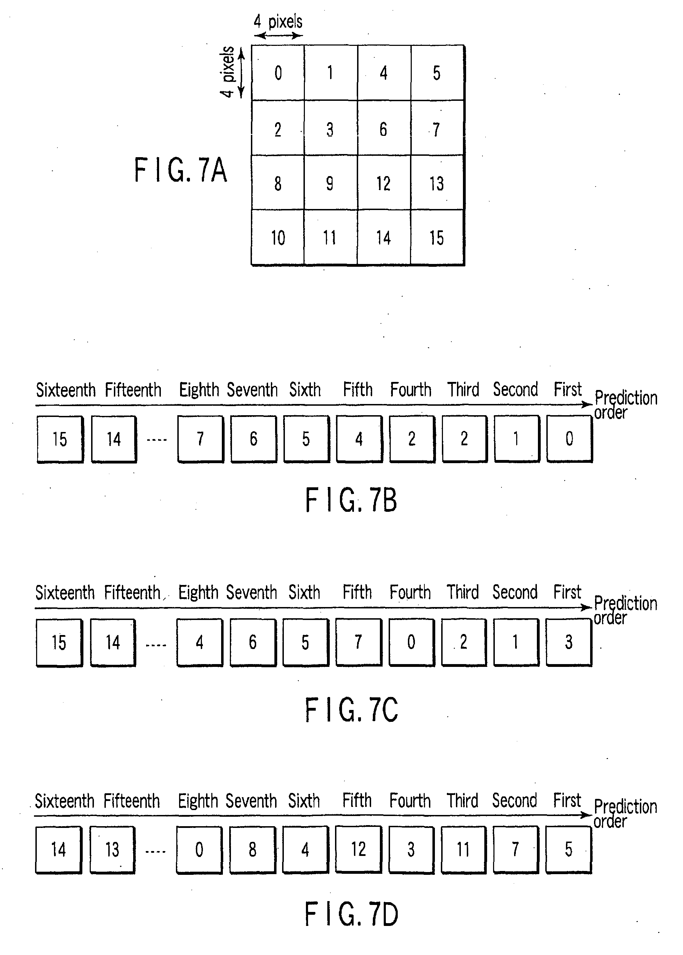

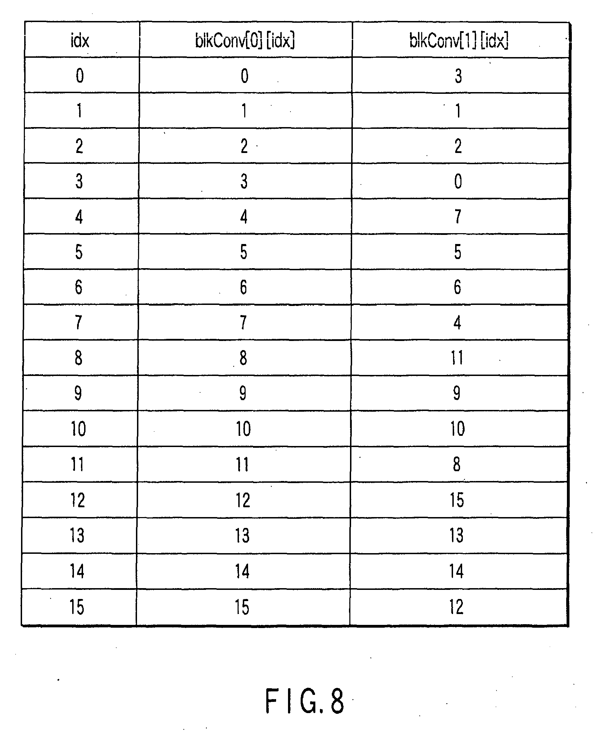

An operation of the prediction order switch 170 will be described with reference to FIGS. 6A to 6D, FIGS. 7A to 7D, and FIG. 8. FIG. 6A shows an index :blk serving as a reference of sub-blocks ($8 \times 8$ pixelblocks) in a macroblock in 8x8 pixel prediction. Similarly, FIG. 7A shows an index :blk of sub-blocks (4x4 pixelblocks) in a macroblock in 4x4 pixel prediction. In FIG. 6A, 8x8 pixelblocks obtained by dividing a macroblock by four are placed in the order such that raster block prediction and an encoding process are performed. In FIG. 7A, in consideration of the 8x8 pixelblocks obtained by dividing the macroblock by four, and 4x4 pixelblocks obtained by dividing the $8 \times 8$ pixelblock by four are placed in the order such that raster block prediction and an encoding process are performed.

The prediction order switch 170 is controlled by the prediction order switching information 143. The prediction order switch 170 transforms an the index :blk serving as a reference depending on a value of a flag :block_order_flag (described later) representing the prediction order switching information 143 to switch a prediction order of sub-blocks. To an order :idx of the sub-blocks, an index :order (expressing a prediction order) of the sub-blocks in actual encoding is given by the following equation:

[Equation 3]

$$order = blkConv[block\_order\_flag][idx] \qquad (3)$$

FIG. 8 shows an example of a concrete transformation table of blkConv[] []. When the flag :block_order_flag is 0 (FALSE), an index :order of a sub-block in actual predictive encoding is an index :idx itself of a sub-block to be encoded, and prediction of blocks and a prediction order are not changed (such prediction performed by the prediction order is called raster block prediction hereinafter).

FIGS. 6B and 7B show prediction orders obtained by raster block prediction to FIGS. 6A and 7A. More specifically, in FIG. 6B, the prediction order is set as an order ($0 \rightarrow 1 \rightarrow 2 \rightarrow 3$) depending on the index :idx. Similarly, as in FIG. 7B, the prediction order is set as an order ($0 \rightarrow 1 \rightarrow 2 \rightarrow ... \rightarrow 14 \rightarrow 15$) depending on the index :idx.

On the other hand, when the flag :block_order_flag is 1 (TRUE), an index :order of sub-blocks to be actually prediction-encoded exhibits a prediction order in which one diagonal block of four sub-blocks is predicted by extrapolation first and the three remaining blocks are predicted by extrapolation or interpolation. The prediction performed by the prediction order will be called extrapolation/interpolation prediction hereinafter.

FIGS. 6C and 7C show changes in prediction order obtained by the extrapolation/interpolation prediction corresponding to FIGS. 6A and 7A, respectively. In FIG. 6C, a sub-block of index = 3 is predicted by extrapolation first, sub-blocks of idx = 1 and idx = 2 are predicted, and finally a sub-block of idx = 0 located at a diagonal position of the position of a sub-block of idx = 3 is predicted by extrapolation. In FIG. 7C, prediction orders are set to four sub-blocks of 4x4 pixels obtained by dividing the $8 \times 8$ pixelblock by four as in FIG. 6C.

As still another example, prediction orders of sub-blocks may be arbitrarily set as shown in FIGS. 6D and 7D depending on properties such as a correlation between pixels in a macroblock.

As described above, the sub-blocks the prediction orders of which are switched by the prediction order switch 170 are input to the unidirectional predictor

171 or the bidirectional predictor 172 to generate prediction signals corresponding to the sub-blocks. The prediction mode number switch 173 outputs a prediction signal obtained by the unidirectional predictor 171 when the prediction mode number switching information 144 represents prediction mode number "1" and outputs a prediction signal obtained by the bidirectional predictor 172 when the prediction mode number switching information 144 represents prediction mode number "2". A prediction signal output from the prediction mode number switch 173 is extracted as an output 122. from the prediction signal generator 113.

Processes of the unidirectional predictor 171 and the bidirectional predictor 172 corresponding to the prediction orders set by the flag :block_order_flag will be described below. As described above, the unidirectional predictor 171 and the bidirectional predictor 172 predict sub-blocks to be encoded by using decoded pixels held in the internal reference image memory 118 shown in FIG. 4 as the internal reference image signal 166.

(Process of Unidirectional Prediction Unit 171 in Raster Block Prediction)

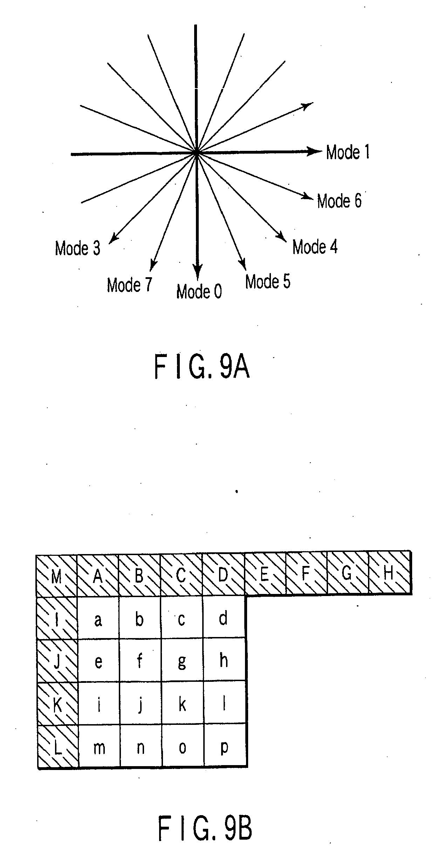

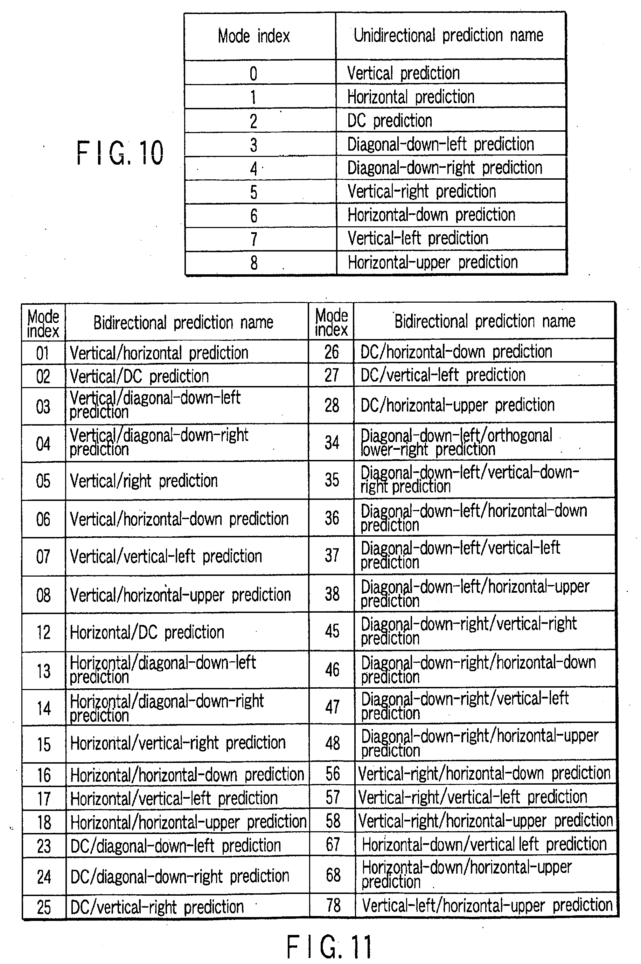

As prediction modes of raster block prediction in the unidirectional predictor 171, for example, nine modes, i.e., mode 0 to mode 8 are present. As shown in FIG. 9A, the eight modes except for mode 2 (modes 0, 1, and 3 to 8) have prediction directions (directions in which encoded pixels are referred to) which are shifted at intervals of 22.5° in an image space formed by the image encoder 100 and are called direction prediction modes. Mode 2 is a DC prediction mode in the unidirectional predictor 171. FIG. 10 shows names of prediction modes: modes 0 to 8 of raster block prediction in the unidirectional predictor 171. Mode indexes expressing modes 0 to 8 are given to the names, respectively.

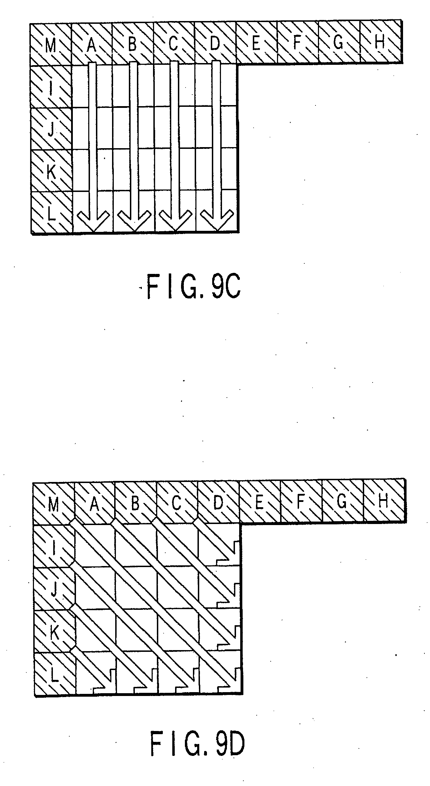

FIG. 9B shows a relation between prediction pixels and reference pixels in the $4 \times 4$ pixel prediction. In FIG. 9B, pixels A to M are reference pixels, and pixels a to p are prediction pixels. A concrete prediction method will be described below by using FIGS. 9A, 9B, 9C, and 9D.

In the unidirectional predictor 171, when DC prediction in mode 2 is selected, values of the prediction pixels a to p are calculated by the following equation to generate prediction signals.

[Equation 4]

$$a \sim p = ave (A, B, C, D, I, J, K, L) \qquad (4)$$

In this equation, ave (·) denotes an average (called average pixel value) of pixel values (luminance values) of the parenthetic reference pixels.

When some of the parenthetic reference pixels cannot be used, an average pixel value of only usable reference pixels is calculated to generate prediction signals. When a usable reference pixel is not present at all, in the prediction signal generator 113, a value (128 in case of 8 bits) which is half a maximum luminance value of the prediction signals is set as a prediction signal.

When a mode except for mode 2 is selected, the unidirectional predictor 171 uses a prediction method which copies reference pixels to prediction pixels to prediction directions shown in FIG. 9A. More specifically, a prediction signal generating method used when mode 0 (vertical prediction) is selected is given by the following equations:

[Equation 5]

$$a, e, i, m = A$$

$$b, f, j, n = B$$

$$c, g, k, o = C$$

$$d, h, l, p = D \qquad (5)$$

This mode 0 can be selected only when reference pixels A to D can be used. In mode 0, as shown in FIG. 9C, reference pixels A to D are directly copied to prediction pixels arranged in a vertical direction to generate prediction signals.

On the other hand, a prediction signal generating method used when mode 4 (diagonal-down-right prediction) is selected is given by the following equations:

[Equation 6]

$$d = (B + (C << 1) + D + 2) >> 2$$

$$c, h = (A + (B << 1) + C + 2) >> 2$$

$$b, g, l = (M + (A << 1) + B + 2) >> 2$$

$$a, f, k, p = (I + (M << 1) + A + 2) >> 2$$

$$e, j, o = (J + (I << 1) + M + 2) >> 2$$

$$i, n = (K + (J << 1) + I + 2) >> 2$$

$$m = (L + (K << 1) + J + 2) >> 2 \qquad (6)$$

Mode 4 can be used only when reference pixels A to D and I to M can be used. In mode 4, a shown in FIG. 9D, values generated by a 3-tap filter are copied in a lower-right direction at 45° to generate prediction signals.

With respect to a prediction mode except for modes 0, 2, and 4, the same framework is used. More specifically, a prediction signal is generated by a method of copying reference pixels which can be used in a prediction direction to prediction pixels arranged in the prediction direction.

(Process of Bidirectional Prediction Unit 172 in Raster Block Prediction).

In unidirectional prediction, a prediction signal is generated on the assumption that an in-block image has only one spatial directivity. When the in-block image has two or more spatial directivities, the assumption cannot be satisfied. For this reason, the number of prediction residual error signals tends to increase when only the unidirectional prediction is used. Therefore, when the image has two or more spatial directivities, two kinds of modes of the nine prediction modes (also including the DC prediction) in the unidirectional predictor 171 are simultaneously used in the bidirectional predictor 172 to perform prediction in consideration of a plurality of spatial directivities, thereby suppressing the number of prediction residual error signals from increasing.

FIG. 11 shows mode indexes corresponding to names of prediction modes in the bidirectional predictor 172. In FIG. 11, a prediction mode which uses two modes is present. For example, the name and the mode index of a prediction mode which uses vertical prediction (mode 0) and horizontal prediction (mode 1) are described as "vertical/horizontal prediction" and "mode 01", respectively. For example, the name and the mode index of a prediction mode which uses the vertical prediction (mode 0) and the DC prediction (mode 2) are described as "vertical/DC prediction" and "mode 02", respectively.

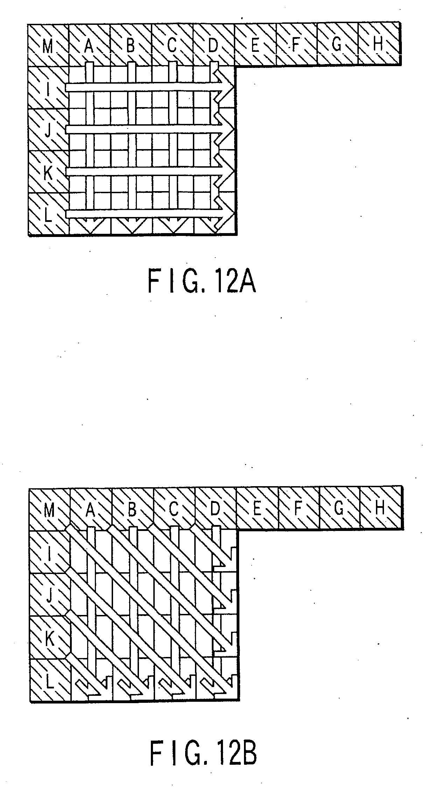

As an example, a prediction signal generating method performed by vertical/horizontal prediction using the vertical prediction (mode 0) and the horizontal prediction (mode 1) will be described below. FIG. 12A shows the concept of vertical/horizontal prediction (mode 01) in 4×4 pixel prediction. A relation between prediction pixels and reference pixels in the 4×4 pixel prediction is the same as that in FIG. 9B. For example, in prediction pixel a, an average pixel value of pixel A referred to in the vertical prediction and pixel I referred to in the horizontal prediction is set as a prediction signal. In prediction pixel b, an average pixel value of reference pixel B in the vertical prediction and reference pixel I in the diagonal-down-right prediction is set as a prediction signal. With respect to the other prediction pixels, prediction signals are generated by the same method as described above.

More specifically, a prediction pixel is calculated by using the following equation in vertical/horizontal prediction (mode 01).

[Equation 7]

$$X(01,n) = (X(0,n) + X(1,n) + 1) >> 1 \qquad (7)$$

In this equation, reference symbol n denotes an index corresponding to prediction pixels a to p shown in FIG. 9B, and X(0,n) and X(1,n) denote prediction signals generated by vertical prediction and horizontal prediction which are unidirectional predictions. Since concrete generating methods of the prediction signals X(0,n) and X(1,n) is the same as that expressed by Equation (5) and Equation (6), a description thereof will be omitted.

A prediction pixel is calculated by using the following equation in vertical/DC prediction (mode 02).

[Equation 8]

$$X(02,n) = (X(0,n) + X(2,n) + 1) >> 1 \qquad (8)$$

A prediction pixel is calculated by using the following equation in vertical/diagonal-down-right prediction (mode 04).

[Equation 9]

$$X(04,n) = (X(0,n) + X(4,n) + 1) >> 1 \qquad (9)$$

FIG. 12B shows the concept of a prediction method in mode 04.

In extrapolating prediction in a plurality of directions except for the prediction in mode 01 or 02, prediction pixels can be similarly calculated. The extrapolating prediction in the plurality of directions can be expressed by the following general equation:

[Equation 10]

$$X(UV,n) = (X(U,n) + X(V,n) + 1) >> 1 \qquad (10)$$

In this equation, X(U,n) and X(V,n) are a mode "U" and a mode "V" in the unidirectional prediction, and X(UV, n) is a prediction signal of a mode "UV" in extrapolating prediction of a plurality of directions.

In this manner, prediction pixels are calculated by the unidirectional predictions of arbitrary two types in units of pixels. A value obtained by averaging these prediction pixels is set as a prediction signal. For this reason, prediction can be performed at high accuracy when a plurality of spatial directivities are present in a block, and encoding efficiency can be improved.

(Extrapolation/interpolation Block Prediction)

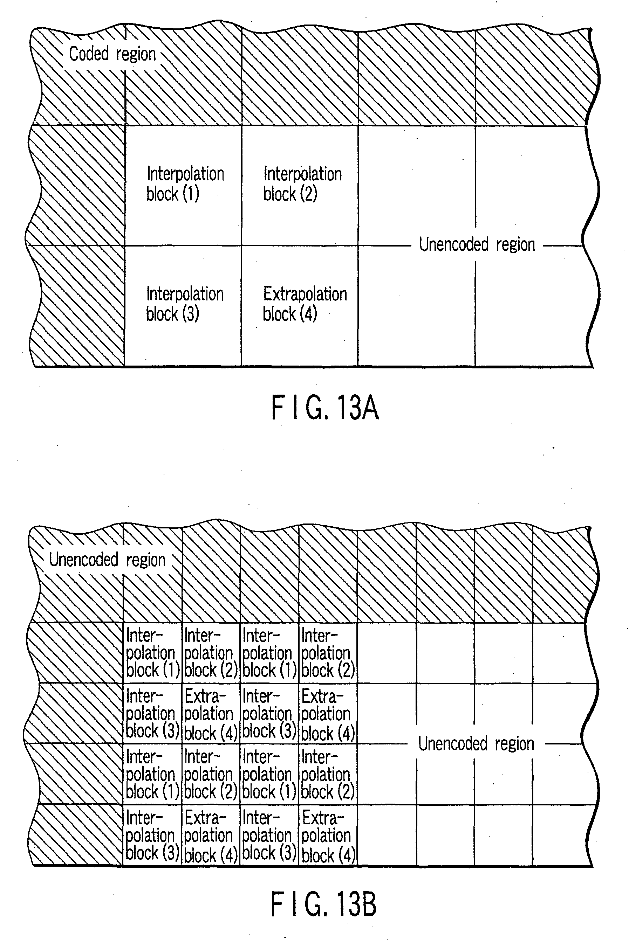

In the extrapolation/interpolation block prediction as described in FIG. 6B, an order of sub-blocks in a macroblock is changed from an order in the raster block prediction to a prediction according to Equation (3). For example, when prediction is performed to 8×8 pixelblocks, as shown in FIG. 13A, an outside corner block is predicted as a block (to be referred to as an extrapolation block hereinafter) which can be extrapolating-predicted in advance, and the three other blocks are predicted as blocks (interpolation blocks hereinafter) which can be interpolating-predicted. More specifically, an extrapolation block (4) is predicted, and then interpolation blocks (1), (2), and (3) are predicted. When 4×4 pixelblocks are predicted, a prediction order is set such that prediction of an extrapolation block and prediction of interpolation blocks are performed to each of the 4×4 pixelblocks in units of 8x8 pixelblocks.

In the prediction process, upon completion of the prediction in units of 8×8 pixelblocks, prediction is performed to the next 8×8 pixelblocks. In this manner, the prediction in units of 8x8 pixelblocks is repeated a total of four times.

(Prediction of Extrapolation Block)

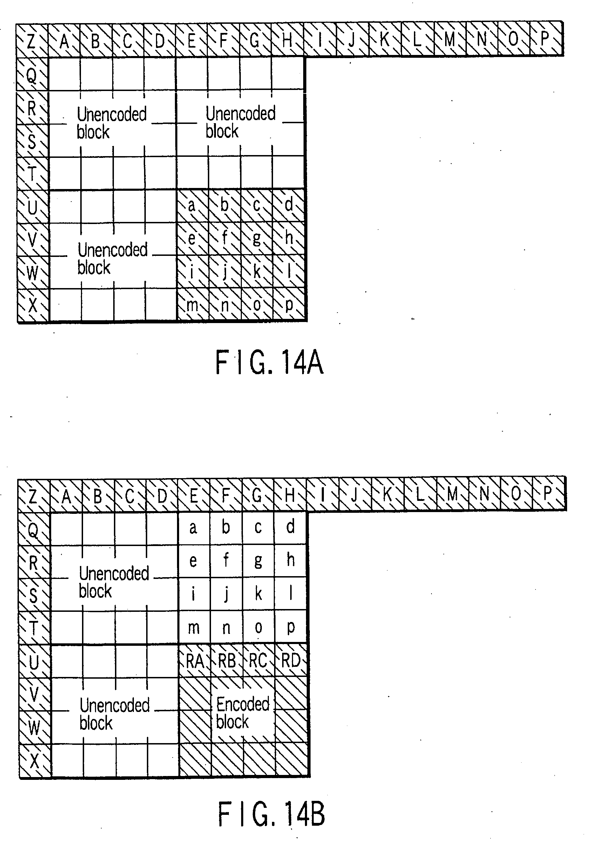

When an extrapolation block is to be predicted, a distance between a reference pixel and a prediction pixel is great. For this reason, a range of the reference pixels is as shown in FIG. 14A. In FIG. 14A, pixels A to X and Z are reference pixels, and pixels a to p are prediction pixels. Although the range of the reference pixels becomes wide, a method of generating a prediction signal by copying reference pixels depending on prediction angles is performed in the same manner as in the raster block prediction.

More specifically, when DC prediction in mode 2 is selected in an extrapolation block, prediction pixels a to p are calculated by the following equation:

[Equation 11]

$$a\text{~}p = ave(E, \ F, \ F, \ H, \ U, \ V, \ W, \ X) \tag{11}$$

In this equation, ave (·) denotes an average pixel value of the parenthetic reference pixels.

When some of the parenthetic reference pixels cannot be used, an average pixel value of only usable reference pixels is calculated to generate prediction signals. When a usable reference pixel is not present at all, in the prediction signal generator 113, a value (128 in case of 8 bits) which is half a maximum luminance value of the prediction signals is set as a prediction signal.

When a mode except for mode 2 is selected, the unidirectional predictor 171 uses a prediction method which copies reference pixels to prediction pixels to prediction directions shown in FIG. 9A. More specifically, a prediction signal generating method used when mode 0 (vertical prediction) is selected is given by the following equations:

[Equation 12]

$$a, \ e, \ i, \ m = E$$

$$b, \ f, \ j, \ n = F$$

$$c, \ g, \ k, \ o = G$$

$$d, \ h, \ l, \ p = H \tag{12}$$

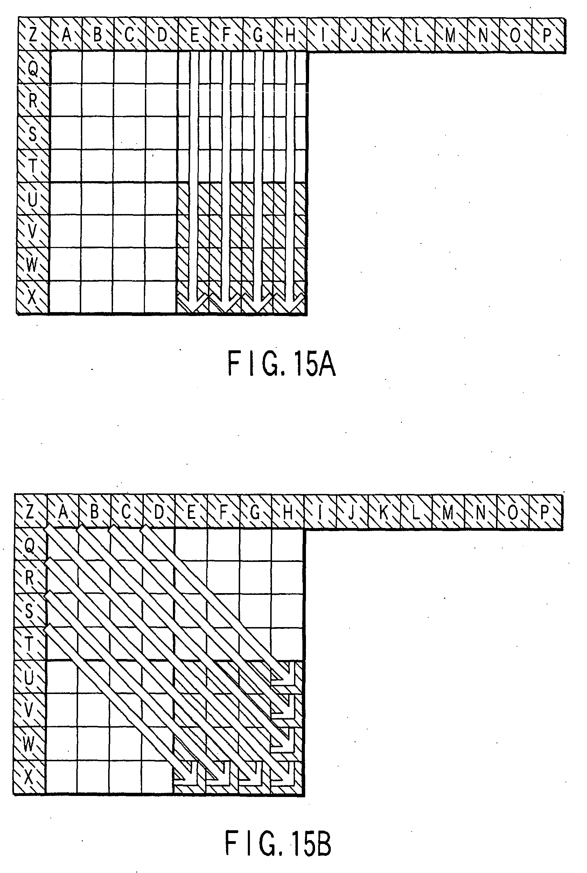

This mode 0 can be selected only when reference pixels E to H can be used. In mode 0, as shown in FIG. 15A, reference pixels E to H are directly copied to prediction pixels arranged in a vertical direction to generate prediction signals.

A prediction signal generating method used when mode 4 (diagonal-down-right prediction) is selected in an extrapolation block is given by the following equations:

[Equation 13]

$$d = (B + (C << 1) + D + 2) >> 2$$

$$c, h = (A + (B << 1) + C + 2) >> 2$$

$$b, g, l = (Z + (A << 1) + B + 2) >> 2$$

$$a, f, k, p = (Q + (Z << 1) + A + 2) >> 2$$

$$e, j, o = (R + (Q << 1) + Z + 2) >> 2$$

$$i, n = (S + (R << 1) + Q + 2) >> 2$$

$$m = (T + (S << 1) + R + 2) >> 2$$

This mode 4 can be selected only when reference pixels A to D, Q to T, and Z can be used. In mode 4, as shown in FIG. 15B, values generated by a 3-tap filter are made prediction pixels aligned in a lower-right direction at 45° to generate prediction signals.

With respect to the prediction modes except for modes 0, 2, and 4, a framework which is almost the same as that described above is used. More specifically, a method of copying a reference pixel which can be used in a prediction direction or an interpolated value generated from the reference pixel to prediction pixels arranged in the prediction direction is used to generate a prediction signal.

(Interpolation Block Prediction)

In FIGS. 13A and 13B, when an interpolation block (2) is predicted, prediction of the extrapolation block (4) is ended. For this reason, prediction which refers to pixels of an extrapolation block (4) can be performed. When an interpolation block (3) is to be predicted, prediction which refers to not only the pixels of the extrapolation block (4) but also the pixels of the interpolation block (2) can be performed. When an extrapolation block (1) is to be predicted, prediction which refers to not only the pixels of the extrapolation block (4) and the interpolation block (2) but also the pixels of the interpolation block (3) can be performed.

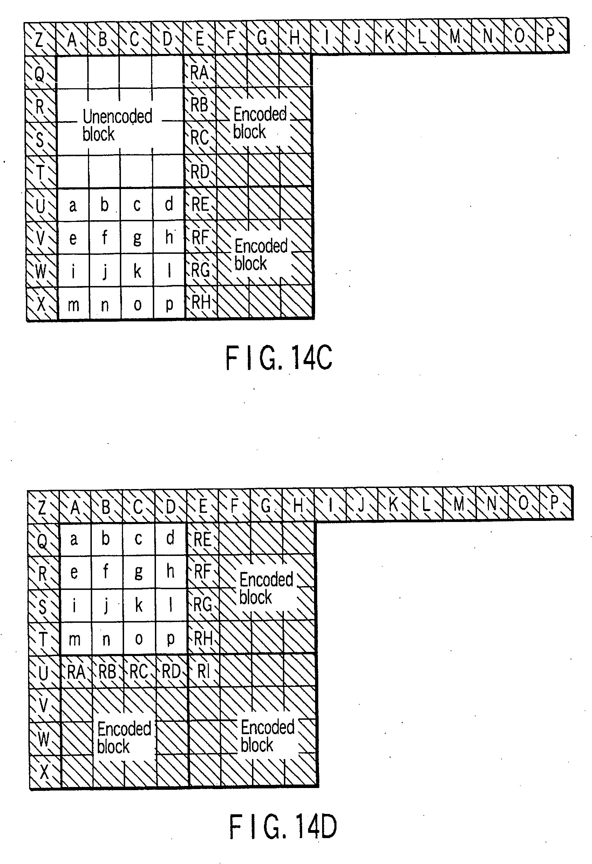

FIGS. 14B, 14C, and 14D show relations between the interpolation blocks (1), (2), and (3) and reference pixels in 4×4 pixel prediction. Pixels RA to RI are reference pixels newly added to FIG. 14A, and pixels a to p are prediction pixels.

(Process of Unidirectional Prediction Unit 171 in Interpolation Block Prediction)

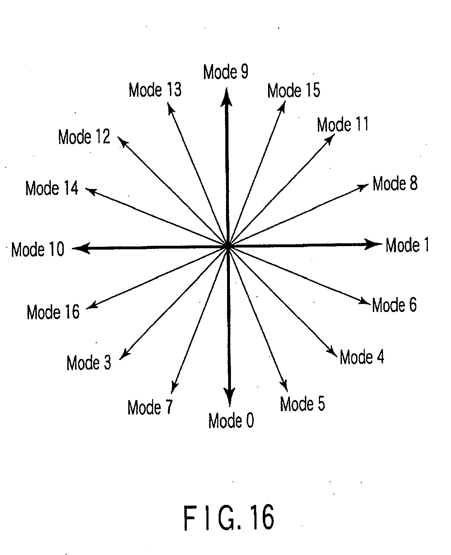

The unidirectional predictor 171 has a total of 17 modes of directional prediction in an extrapolation block with respect to interpolation block prediction and inverse extrapolation prediction which refers to reference pixels in an encoded macroblock as shown in FIG. 16. The 17 modes except for mode 2 have prediction directions shifted at intervals of 22.5°.

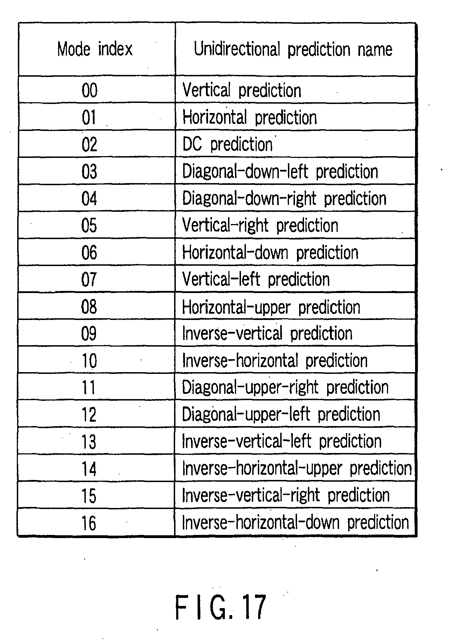

FIG. 17 shows names of prediction modes 00 to 16 of unidirectional prediction performed in interpolation block prediction in the unidirectional predictor 171. Mode indexes 00 to 16 expressing modes 0 to 16 are added to the names, respectively. In FIG. 17, to a prediction mode of extrapolation block prediction (prediction raster block prediction) shown in FIG. 10, an inverse prediction mode is added.

More specifically, modes of vertical prediction, horizontal prediction, DC prediction, diagonal-down-left prediction, diagonal-down-right prediction, vertical-right prediction, horizontal-lower prediction, vertical-left prediction, and horizontal-upper prediction are common in FIGS. 10 and 17. In FIG. 17, in addition to the modes shown in FIG. 10, inverse vertical prediction (mode 9), inverse horizontal prediction (mode 10), diagonal-upper-right prediction (mode 11), diagonal-upper-left prediction (mode 12), inverse-vertical-left prediction (mode 13), inverse-horizontal-upper-prediction (mode 14), inverse-vertical-right-prediction (mode 15), and inverse-horizontal-down prediction (mode 16) are added.

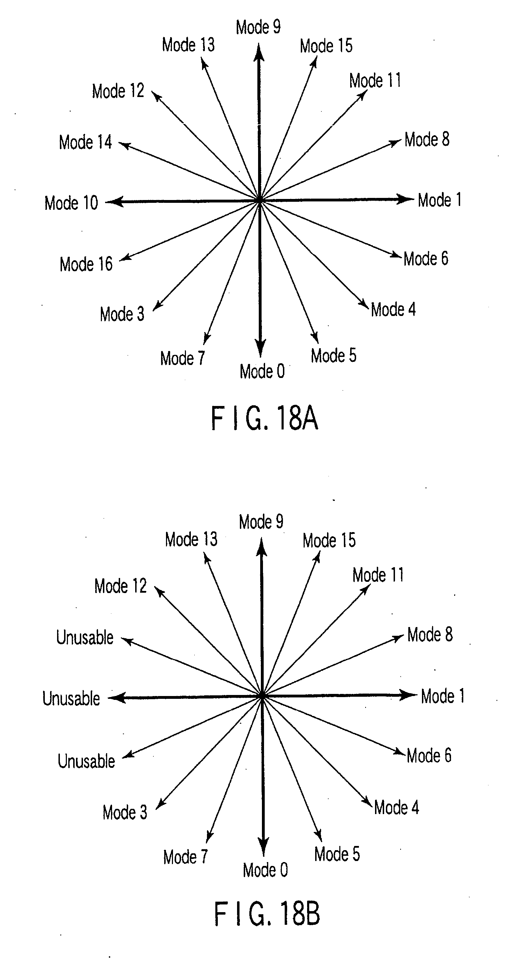

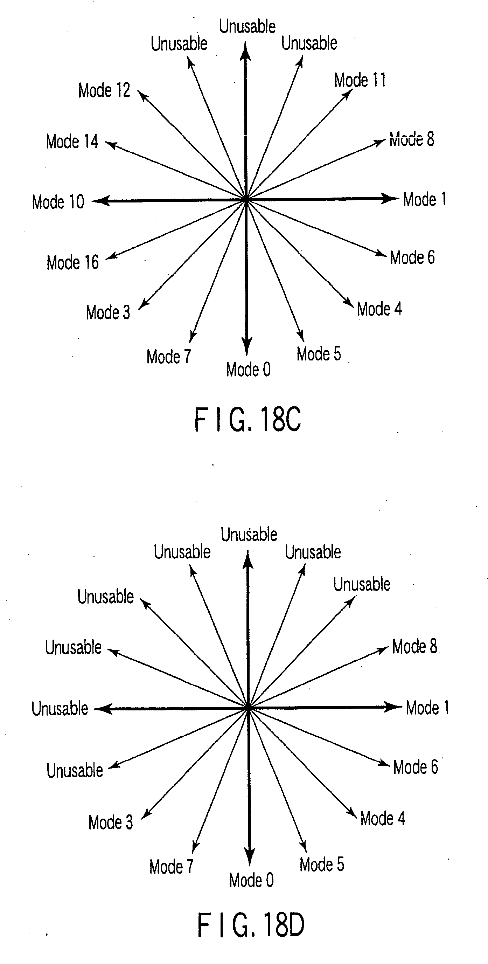

It is determined whether a prediction mode can be selected depending on a positional relation of an interpolation block and reference pixels and the presence/absence of reference pixels. For example, in the interpolation block (1), reference pixels are arranged in all the directions, i.e., left, right, upper, and lower. For this reason, as shown in FIG. 18A, all modes 0 to 16 can be selected. In the interpolation block (2), since no reference pixel is arranged on the right, mode 10, mode 14, and mode 16 cannot be selected as shown in FIG. 18B. In the interpolation block (3), since no reference pixel is arranged on the lower side, mode 9, mode 13, and mode 15 cannot be selected as shown in FIG. 18C.

A prediction signal generating method of the unidirectional predictor 171 in the interpolation block prediction will be described below. In the unidirectional predictor 171, when DC prediction in mode 2 is selected, an average pixel value of upper, lower, left, and right nearest reference pixels is calculated to generate a prediction signal.

More specifically, with respect to the interpolation block (1), prediction signals are calculated according to the following equation:

[Equation 14]

$$a \sim p = ave(A, B, C, D, RA, RB, RC, RD,$$
$$Q, R, S, T, RE, RF, RG, RH) \qquad (14)$$

With respect to the interpolation block (2), a prediction signal is calculated according to the following equation:

[Equation 15]

$$a \sim p = ave(Q, R, S, T, E, F, G, H,$$
$$RA, RB, RC, RD) \qquad (15)$$

With respect to the interpolation block (3), a prediction signal is calculated according to the following equation:

[Equation 16]

$$a \sim p = ave(A, B, C, D, U, V, W, X,$$
$$RE, RF, RG, RH) \qquad (16)$$

In Equations (14), (15), and (16), ave(·) denotes an average pixel value of the parenthetic reference pixels.

When some of the parenthetic reference pixels cannot be used, an average pixel value of only usable reference pixels is calculated to generate prediction signals.

When a mode other than mode 2 is selected, the unidirectional predictor 171 uses a prediction method which copies reference pixels to prediction pixels to prediction directions shown in FIG. 16. Description of calculation of prediction pixels in mode 0 to mode 8 will be omitted because prediction is performed at the same prediction angles as those in the extrapolation block.

With respect to mode 9 to mode 16, encoded blocks arranged in a macroblock are referred to in a pixel order or a prediction order of the encoded extrapolated block (4). More specifically, when mode 9 (inverse-vertical-prediction) is selected, a prediction signal is generated from a nearest reference pixel on the lower side. With respect to the interpolation block (1) and the interpolation block (2), prediction signals are calculated according to the following equations:

[Equation 17]

$$a, e, i, m = RA$$
$$b, f, j, n = RB$$
$$c, g, k, o = RC$$
$$d, h, l, p = RD \qquad (17)$$

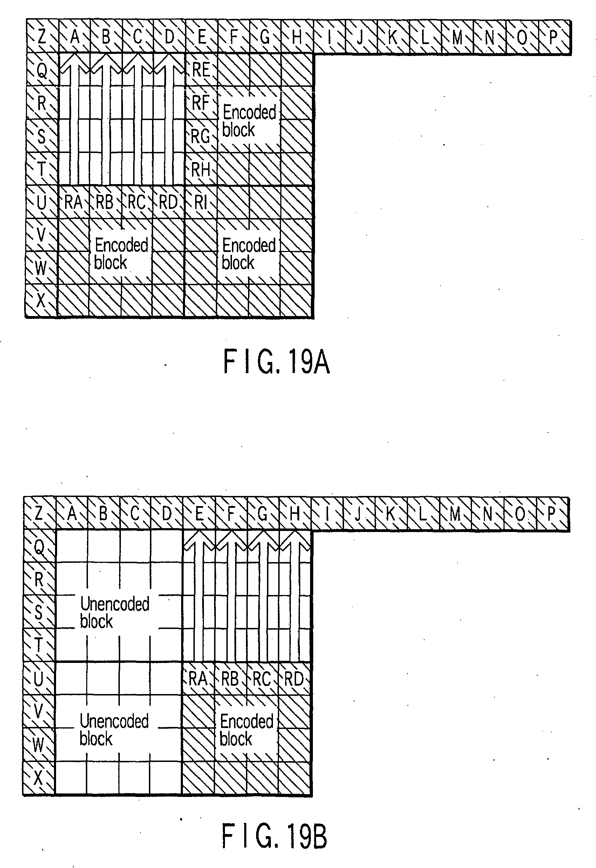

FIGS. 19A and 19B show methods of generating prediction signals to the interpolation block (1) and the interpolation block (2) in mode 9. Reference pixels RA to RD are directly copied to prediction pixels arranged in a vertical direction to generate a prediction signal. With respect to the interpolation block (3), mode 9 cannot be used because a reference pixel is not present on the lower side.

When mode 10 (inverse-horizontal-prediction) is selected, a prediction signal is generated from a nearest reference pixel on the right side. With respect to the interpolation block (1) and the interpolation block (3), prediction signals are calculated according to the following equations:

[Equation 18]

$$a, b, c, d = RE$$
$$e, f, g, h = RF$$
$$i, j, k, h = RG$$
$$m, n, o, p = RH \qquad (18)$$

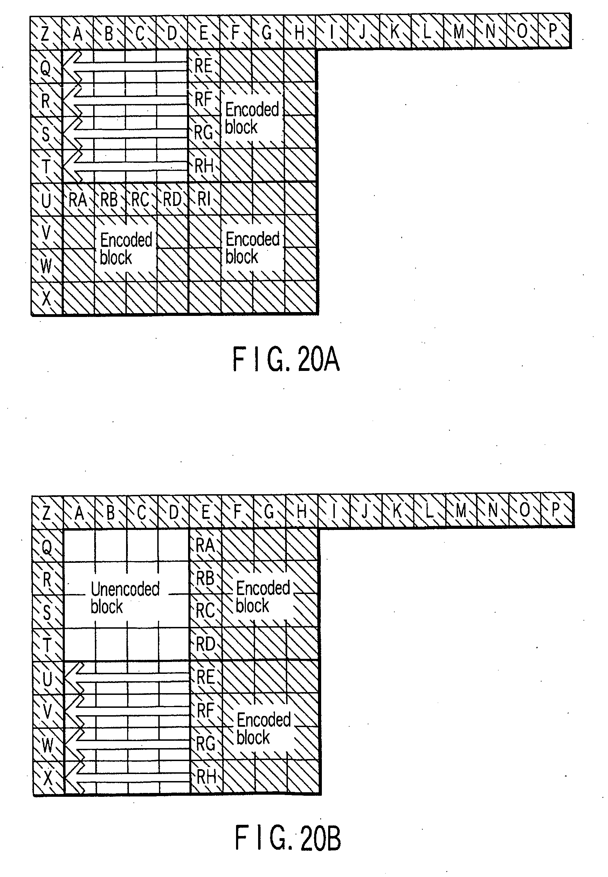

FIGS. 20A and 20B show methods of generating prediction signals to the interpolation block (1) and the interpolation block (3) in mode 10. Reference pixels RE to RH are directly copied to prediction pixels arranged in a horizontal direction to generate a prediction signal. With respect to the interpolation block (2), mode 10 cannot be used because a reference pixel is not present on the right side.

Furthermore, when mode 12 (diagonal-upper-left prediction) is selected, a prediction signal is calculated to the interpolation block (1) according to the following equations:

[Equation 19]

$$d = (RE + (RF << 1) + RG + 2) >> 2$$
$$c, h = (RF + (RG << 1) + RH + 2) >> 2$$
$$b, g, l = (RG + (RH << 1) + RI + 2) >> 2$$
$$a, f, k, p = (RH + (RI << 1) + RD + 2) >> 2$$
$$e, j, o = (RI + (RD << 1) + RC + 2) >> 2$$
$$i, n = (RD + (RC << 1) + RB + 2) >> 2$$
$$m = (RC + (RB << 1) + RA + 2) >> 2 \qquad (19)$$

With respect to the interpolation block (2), a prediction signal is calculated according to the following equation:

[Equation 20]

$$d, c, h, b, g, l, a, f, k, p = RD$$
$$e, j, o = (RC + (RD << 1) + RD + 2) >> 2$$
$$i, n = (RB + (RC << 1) + RD + 2) >> 2$$
$$m = (RA + (RB << 1) + RC + 2) >> 2 \qquad (20)$$

With respect to the interpolation block (3), a prediction signal is calculated according to the following equation:

[Equation 21]

$$d = (RE + (RF << 1) + RG + 2) >> 2$$

$$c, h = (RF + (RG << 1) + RH + 2) >> 2$$

$$b, g, l = (RG + (RH << 1) + RH + 2) >> 2$$

$$a, f, k, p, e, j, o, m = RH \tag{21}$$

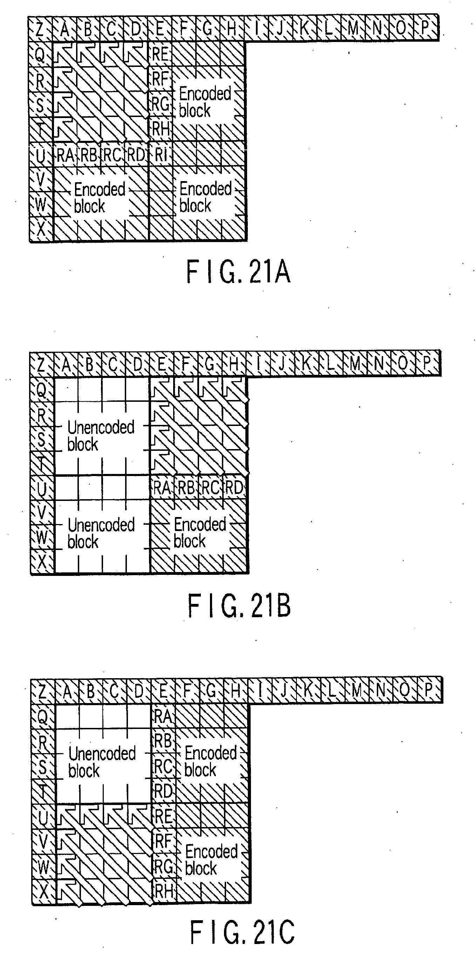

FIGS. 21A, 21B, and 21C show methods of generating prediction signals to the interpolation block (1), the interpolation block (2), and the interpolation block (3), respectively in mode 12. A value generated by a 3-tap filter is copied on an upper-left side at 45° to generate a prediction signal.

With respect to prediction modes (modes 12 to 16) except for the modes 2, 9, and 11, to prediction directions shown in FIGS. 18A, 18B, 18C, and 18D, a prediction method which copies prediction signal interpolated from a nearest pixel which can be referred to is used. When no reference pixel is arranged in the prediction direction, the value of the nearest reference pixel may be copied to generate a reference pixel. Alternatively, virtual reference pixels may be generated from interpolation of a plurality of reference pixels, and the virtual reference pixels may be used in prediction.

(Process of Bidirectional Prediction Unit 172 in Interpolation Block Prediction)

The bidirectional predictor 172 simultaneously uses two modes of the 17 prediction modes (also including DC prediction) of the interpolation block prediction performed by the unidirectional predictor 171 in the interpolation block prediction to perform prediction containing a plurality of directivities. A concrete prediction signal generating method is the same as that given by Equation (10). More specifically, a value obtained by averaging, in unit of pixels, prediction signals obtained in the two selected modes (modes "U" and "V" in Equation (10)) is used as a prediction signal of the prediction pixels.

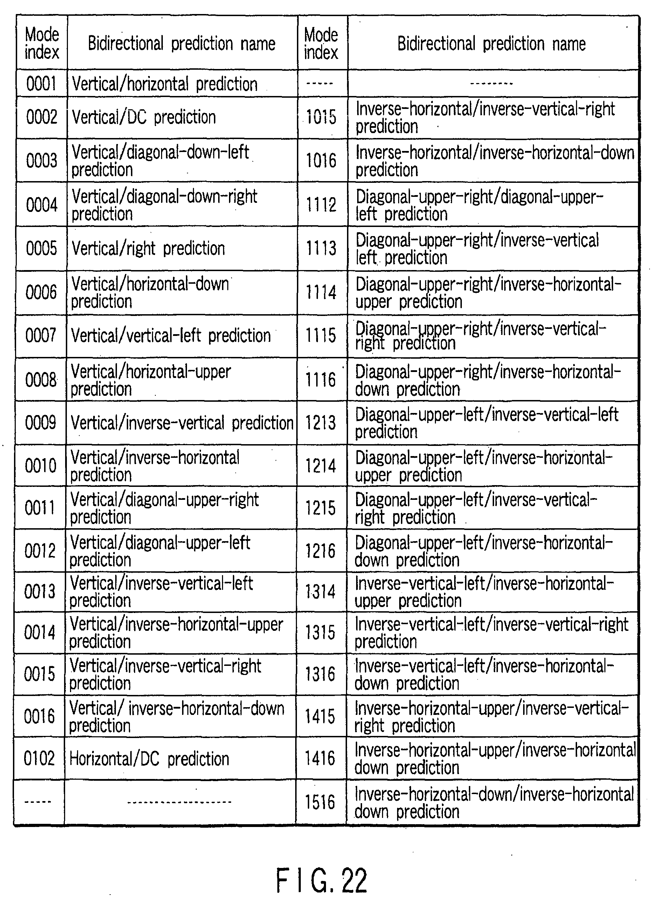

FIG. 22 shows a mode index corresponding to a name of a prediction mode performed in the interpolation block prediction in the bidirectional predictor 172. In FIG. 22, there is a prediction mode using two modes. For example, a name and a mode index of a prediction mode when vertical prediction (mode 0) and inverse horizontal prediction (mode 10) are expressed as "vertical/inverse-horizontal prediction" and "mode 0010", respectively. When a number of each prediction mode is in single figure, 0 is added to the head of the number to express the number as a two-figure number. Mode 0 and mode 00 have the same meaning.

In this manner, in bidirectional prediction of an interpolation block, not only simple interpolation prediction in which prediction mode directions are opposite to each other, but also interpolation prediction which copes with a slight change in directivity of the block or complexity of the directivity can be performed. Therefore, prediction residual signals can be advantageously reduced.

(Procedure of Image Encoding)

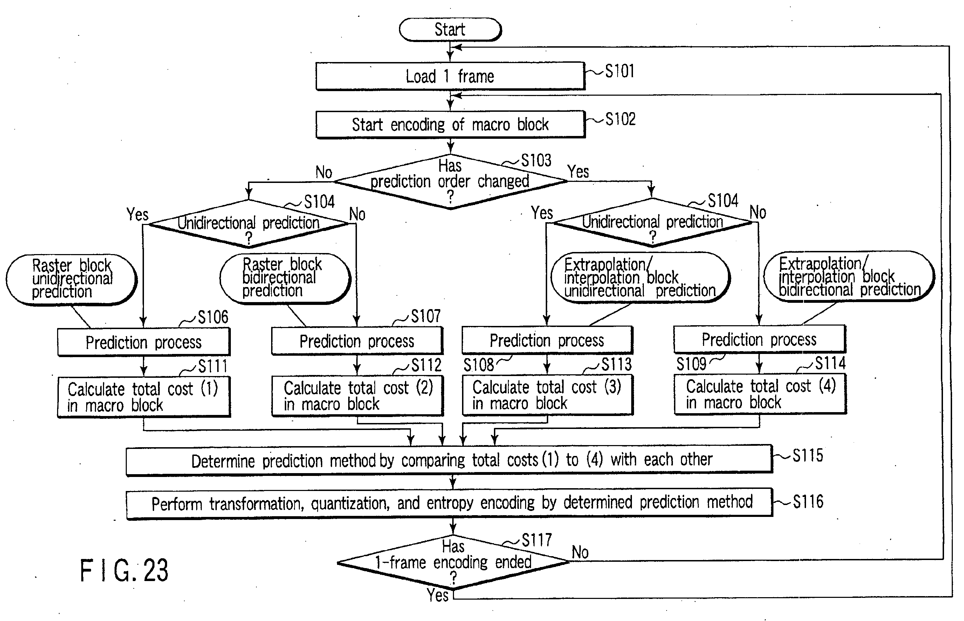

A procedure of the image encoder 100 will be described below with reference to FIG. 23. When an input image signal 120 of one frame is input to the image encoder 100 (step S101), a frame to be encoded of the input image signal 120 is divided into a plurality of pixelblocks (macroblocks) by the frame divider 101 to generate the block image signal 121. Encoding the block image signal 121 is started (step S102). The block image signal 121 is input to the predictor 102.

In the predictor 102, it is determined on the basis of the prediction order switching information 143 whether a prediction order of sub-blocks is changed (step S103). When the prediction order is not changed (NO in step S103), block_order_flag is FALSE, and the prediction order switch 170 selects "raster block prediction" which predicts and encodes sub-blocks according to an order expressed by Equation (3).

In the raster block prediction, it is determined by the prediction mode number switching information 144 whether unidirectional prediction is performed to sub-blocks (step S104). In this case, when the unidirectional prediction is performed (YES in step S104), the unidirectional predictor 171 performs prediction (step S106). When the unidirectional prediction is not performed (NO in step S104), the bidirectional predictor 172 performs prediction (step S107).

On the other hand, when the prediction order is changed (YES in step S103), block_order_flag is TRUE, and the prediction order switch 170 selects "extrapolation/interpolation block prediction" which predicts and encodes sub-blocks according to the order expressed by Equation (3).

In the extrapolation/interpolation block prediction, it is determined by the prediction mode number switching information 144 whether unidirectional prediction is performed to the sub-blocks (step S105). In this case, when the unidirectional prediction is performed (YES in step S105), the unidirectional predictor 171 performs prediction (step S108). When the unidirectional prediction is not performed (NO in step S105), the bidirectional predictor 172 performs prediction (step S109).

Upon completion of the prediction in step S106, S107, S108, or S109, a total cost (1), (2), (3), or (4) in a macroblock is calculated from Equation (3) and Equation (4) (step S111, S112, S113, or S114). The total costs calculated in steps S111, S112, S113, and S114 are compared with each other to determine a prediction method (step S115). By using the prediction method determined as described above, the orthogonal transformation/quantization unit 104 and the entropy encoder 108 perform encoding to output the encoded data 146 (step S116).

At this time, inverse quantization and inverse orthogonal transformation are performed to the quantization transformation coefficient information 127 by the inverse quantization/inverse orthogonal transformation unit 105 to generate the decoded prediction residual error signal 128. The decoded prediction residual error signal 128 and the prediction signal 126 input from the mode selector 103 are added to each other by the adder 106 to generate the local decoding signal 129. The local decoding signal 129 is accumulated in the reference image memory 107.

It is determined whether predictive encoding of one frame of the input image signal 120 is ended (step S117). When the predictive encoding is ended (YES in step S117), the input image signal 120 of the next frame is input to perform predictive encoding again. On the other hand, the predictive encoding of one frame is not ended (NO in step S117), the operation returns to step S102 ·to perform predictive encoding to the block image signal 121 of the next macroblock.

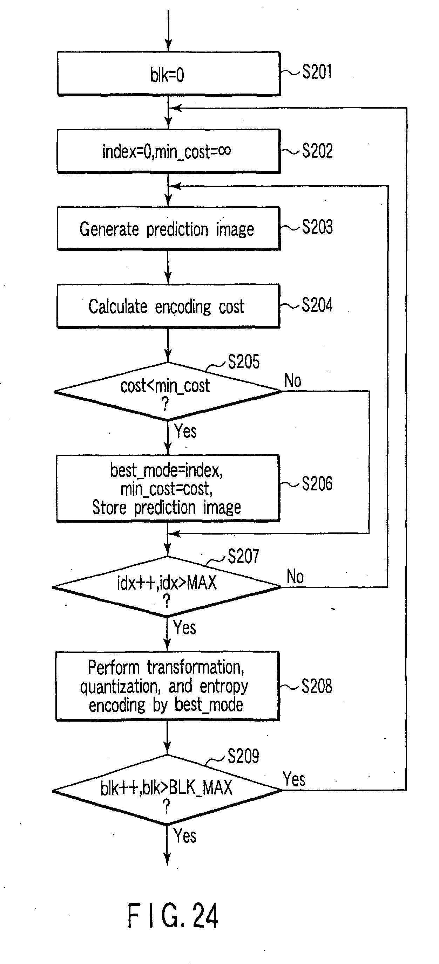

A procedure of prediction processes in steps S104 and S105 in FIG. 23 will be described below with reference to FIG. 24.

When the block image signal 121 is input to the predictor 102, a sub-block expressed by blk = 0 is set in the prediction signal generator 113 (step S201). Furthermore, a prediction mode and an encoding cost in the mode selector 103 and the internal mode selector 114 are initialized (step S202). For example, prediction mode :index is set to 0, and a minimum encoding cost :min_cost is set to be infinite.

The prediction signal generator 113 generates the prediction signal 122 by one mode which can be selected to the sub-block expressed by blk = 0 (step S203). A difference between the block image signal 121 and the prediction signal 122 is calculated to generate the prediction residual error signal 123, and an encoding cost is calculated according to Equation (1) or Equation (2) (step S204).

The mode selector 103 determines whether the calculated encoding cost is smaller than the minimum encoding cost :min_cost (step S205). When the encoding cost is smaller than the minimum encoding cost (YES in step S205), the minimum encoding cost is updated with the calculated encoding cost, and prediction mode information obtained at this time is held as a best_mode index representing optimum prediction mode information (step S206). When the calculated cost is larger than the minimum encoding cost :min_cost (NO in step S205), the mode index :index is incremented, and it is determined whether the incremented index is larger than the last number (MAX) of the mode (step S207).

When the index is larger than MAX (YES in step S207), the optimum prediction mode information 125 and the prediction residual error signal 126 are given from the mode selector 103 to the orthogonal transformation/quantization unit 104 to perform orthogonal transformation and quantization. The quantization transformation coefficient information 127 obtained by the orthogonal transformation/quantization unit 104 is entropy-encoded by the entropy encoder 108 together with the prediction mode index information 141 (step S208). On the other hand, when the index is smaller than MAX (NO in step S207), the operation returns to step S203 to generate the prediction signal 122 of a prediction mode indicated by the next index.

When encoding in best_mode is performed, the quantization transformation coefficient information 163 obtained by the internal orthogonal transformation/quantization unit 115 is given to the internal inverse quantization/inverse orthogonal transformation unit 116 to perform inverse quantization and inverse transformation. The decoded prediction residual error signal 164 generated by the internal inverse quantization/inverse orthogonal transformation unit 116 is added to the prediction signal 162 of best_mode input from the internal mode selector 114 by the internal adder 117. The internal decoding signal 165 generated by the internal adder 117 is stored in the internal reference image memory 118 (step S208).

The block encoding number :blk is incremented, it is determined whether the value of the incremented blk is larger than a total number of small blocks: BLK_MAX (16 in $4 \times 4$ pixel prediction, and 4 in 8x8 pixel prediction) in a macroblock (step S209). When the value of the incremented blk is larger than BLK_MAX (YES in step S209), the prediction process in the macroblock is ended. On the other hand, when the incremented blk is smaller than the BLK_MAX (NO in step S209), the operation returns to step S202 to perform a prediction process of a small block indicated by the next blk.

As described above, according to the embodiment, switching of prediction orders and switching of unidirectional prediction and bidirectional prediction (switching of prediction mode numbers) are adaptively performed depending on properties (directivity, complexity, and texture) of each region of an image. Therefore, prediction efficiency is improved, and encoding efficiency is consequently improved.

In the image encoding apparatus according to an embodiment of the present invention, various modifications can be available.

(a) In the embodiment, intra-frame prediction related to 4x4 pixel prediction is described. However, the same intra-frame prediction can also be performed in $8 \times 8$ pixel prediction or $16 \times 16$ pixel prediction or for a color-difference signal.

(b) The number of prediction modes may be reduced to suppress an arithmetic operation cost. The intervals of the prediction directions are not limited to 22.5°, and angular interval may be made less or may be made larger.

(c) In the embodiment, prediction modes except for mode 2 of the intra-frame prediction use a directional prediction. However, not only directional prediction, but also interpolating prediction such as planar prediction, bilinear interpolation, cubic convolution interpolation, or nearest neighbor interpolation may be set as one prediction mode.

(d) In the embodiment, an average pixel value in two modes prepared for a bidirectional prediction mode selected from a plurality of prediction modes is set as a prediction value. In place of calculation of the average pixel value, a prediction value may be calculated by a weighted average using a weighting factor such as 1:3 or 1:4. In this case, weighting factors of the prediction modes may be tabled.

Alternatively, a prediction pixel may be calculated by using a maximum value filter, a minimum value filter, a median filter, and a weighting table having described therein weighting factors depending on an angle of directional prediction or the number of used prediction modes. Three or more prediction modes may be selected from the plurality of prediction modes to generate a prediction value. With respect to the number of modes selected from the plurality of prediction modes and the weighting table, a plurality of candidates may be held in units of sequences, pictures, slices, macroblocks, or pixels and switched in these units.

(d) In the embodiment, it is switched whether prediction orders of sub-blocks are changed in units of macroblocks of $16 \times 16$ pixels. The switching of changes in prediction order may be performed in units of pixel sizes such as $32 \times 32$ pixels, $64 \times 64$ pixels, or $69 \times 32$ pixels or frames.

(e) The embodiment describes a case in which sub-blocks in a macroblock are sequentially predicted from an upper left block to a lower right block. However, the prediction order is not limited to this order. For example, prediction may be sequentially performed from a lower right block to an upper left block or may be spirally performed from the center of the frame. The prediction may be sequentially performed from the upper right block to the lower left block or sequentially performed from a peripheral part of the frame to the central part.

(f) In the embodiment, only intra-frame prediction is described as a prediction mode. However, inter-frame prediction which performs prediction by using correlation between frames may be used. When at least one prediction mode is selected from a plurality of prediction mode candidates, any one of a prediction mode by intra-frame prediction and a prediction mode by inter-frame prediction may be selected, or both the prediction modes may be selected. When both the prediction mode by the intra-frame prediction and the prediction mode by the inter-frame prediction are selected, three-dimensional prediction which uses a spatial correlation and a temporal correlation between reference pixels and prediction pixels is realized.

(g) The intra-frame prediction used in the embodiment may be performed in an inter-frame encoding slice. In this case, switching between the intra-frame prediction and the inter-frame prediction need not be performed in units of macroblocks. The switching may be performed in units of $8 \times 8$ pixelblocks or $8 \times 4$ pixelblocks. The same process may be performed to a pixel region having an arbitrary shape and generated by a region dividing method.

(h) In the embodiment, it is switched by an encoding cost calculated from Equations (1) and (2) whether prediction orders are change and whether unidirectional prediction or bidirectional prediction is performed. As the encoding cost, not only the' encoding cost calculated by Equations (1) and (2) but also activity information such as a variance, a standard deviation, a frequency distribution, or a correlation coefficient calculated by a target block or an adjacent block may be used. On the basis of the activity information, switching of changes in prediction order or switching between the unidirectional prediction and the bidirectional prediction may be performed.

For example, a correlation coefficient between a left reference pixel and an upper reference pixel is calculated to predetermined pixels. When the correlation coefficient is larger than, for example, a certain threshold value, it is determined that correlation between the prediction pixel and the left and upper reference pixels is high not to change the prediction order. For example, a variance in a target block is calculated. When the variance is larger than, for example, a certain threshold value, it is determined that a texture in a block is complex, and bidirectional prediction is performed. On the other hand, when the variance is smaller than, for example, the threshold value, it is determined that the texture in the block is monotonous, and unidirectional prediction is performed.

(j) In the orthogonal transformation/quantization unit 104 and the inverse quantization/inverse orthogonal transformation unit 105 shown in FIG. 3, a process need not be performed to all prediction residual error signals. For example, some of the prediction residual error signals may be encoded by the entropy encoder 108. Alternatively, the processes of quantization and inverse quantization may be omitted, and processes of orthogonal transformation and inverse orthogonal transformation may be omitted.

(First Example of Syntax Structure)

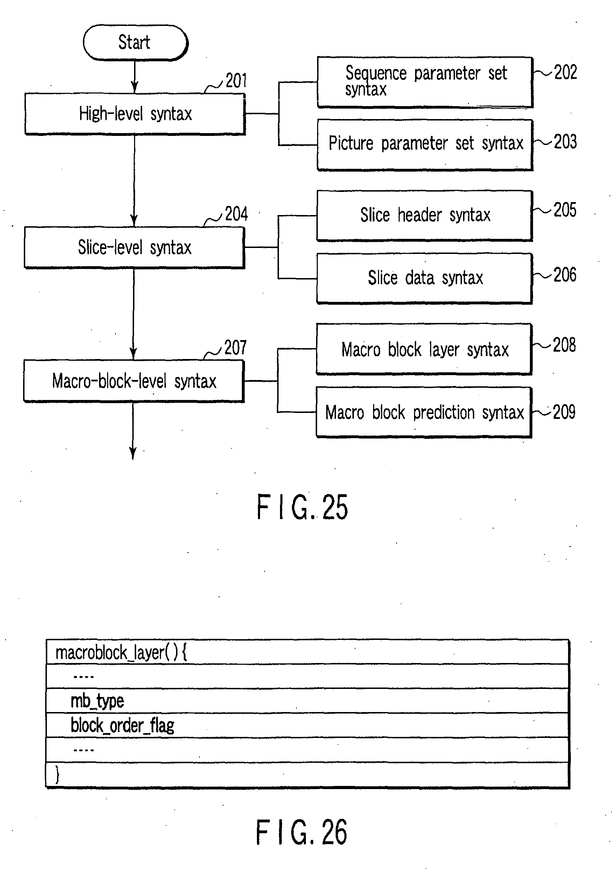

An outline of a syntax structure used in the image encoder 100 will be described below with reference to FIG. 25.

A syntax is constituted by three parts, i.e., a high-level syntax 201, a slice-level syntax 204, and a macro-block-level syntax 207. In the high-level syntax 201, syntax information of an upper layer which is higher than a slice is filled. In the slice-level syntax 204, necessary information is clearly written in units of slices. In the macro-block-level syntax 207, a change value of a quantization parameter, mode information, and the like required for each macroblock are clearly written.

The three parts are finely constituted by a plurality of syntaxes. More specifically, the high-level syntax 201 includes syntaxes of a sequence level and a picture level, i.e., a sequence parameter set syntax.202 and a picture parameter set syntax 203. The slice-level syntax 204 includes a slice header syntax 205 and a slice data syntax 206. The macro-block-level syntax 207 includes a macroblock layer syntax 208 and a macroblock prediction syntax 209.

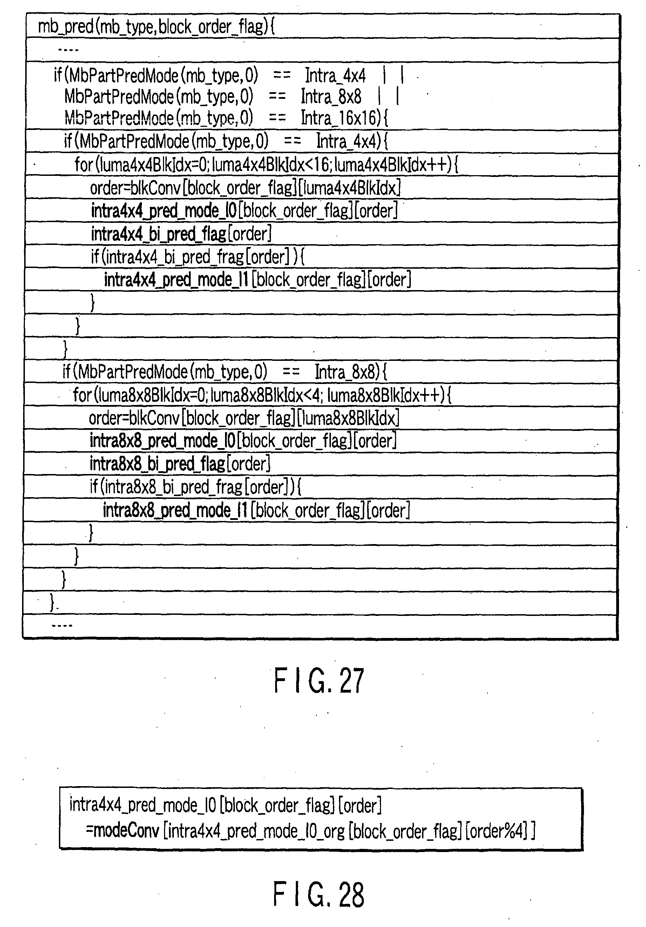

In the embodiment, especially required syntax information is constituted by the macroblock layer syntax 208 and the macroblock prediction syntax 209. The macroblock layer syntax 208 and the macroblock prediction syntax 209 will be described below in detail with reference to FIGS. 26 and 27.

A flag block_order_flag indicated in the macroblock layer syntax in FIG. 26 denotes whether switching of prediction orders is performed by a macroblock. More specifically, FALSE of the flag :block_order_flag denotes that switching of prediction orders is not performed by the macroblock, while TRUE denotes that switching of prediction orders is performed by the macroblock.

In the macroblock prediction syntax in FIG. 27, prediction mode information of each sub-block ($4 \times 4$ pixelblocks or $8 \times 8$ pixelblocks) in a macroblock is clearly written. With respect to the unidirectional prediction, prediction mode information indicating a mode used in a plurality of prediction modes is expressed by intra4x4(8x8)_pred_mode_10_org or intra4x4(8x8)_pred_mode_11_org. With respect to the bidirectional prediction, the prediction mode information includes two syntaxes. In this case, a prediction mode having a smaller mode index (list 0) when prediction modes of two types are selected from the plurality of prediction modes is expressed by intra4x4(8x8)_pred_mode_10_org, and a prediction mode having a larger mode index (list 1) is expressed by intra4x4(8x8)_pred_mode_11_org. The prediction mode having the larger mode index (list 0) may be expressed by intra4x4(8x8)_pred_mode_10_org, and the prediction mode having the smaller mode index (list 1) may be expressed by intra4x4(8x8)_pred_mode_11_org.

A configuration of a macroblock prediction syntax obtained when $4 \times 4$ pixel prediction is selected will be described below with reference to FIG. 27.

In FIG. 27, blkConv[block_order_flag][luma4x4BlkIdx] has a transformation table which performs transformation of a prediction order as shown in FIG. 8 and outputs an index of a block to be encoded.

In FIG. 27, intra4x4_pred_mode_10[block_order_flag][order] is data of an index obtained by transforming intra4x4_pred_mode_10_org[block_order_flag][order] according to modeConv[block_order_flag][intra4x4_pred_mode_10_org].

In FIG. 27, intra4x4_bi_pred_flag is a flag which switches whether bidirectional prediction is performed to the $4 \times 4$ pixelblocks. More specifically, FALSE of the flag intra4x4_bi_pred_flag means that the $4 \times 4$ pixelblocks are the unidirectional prediction, and TRUE means that the $4 \times 4$ pixelblocks are the bidirectional prediction.

In FIG. 27, intra4x4_pred_mode_11 is data of an index obtained by transforming intra4x4_pred_mode_11_org [block_order_flag][order] according to modeConv[block_order_flag][intra4x4_pred_mode_11_org]. The data intra4x4_pred_mode_11 is encoded when intra4x4_bi_pred_flag is TRUE.

Details of the syntaxes will be described below.

Transformation is performed to luma4x4Blk according to a table shown in blkConv[block_order_flag] [luma4x4BlkIdx] every block_order_flag to calculate.a block index :order indicating a sub-block to be encoded (FIG. 8).

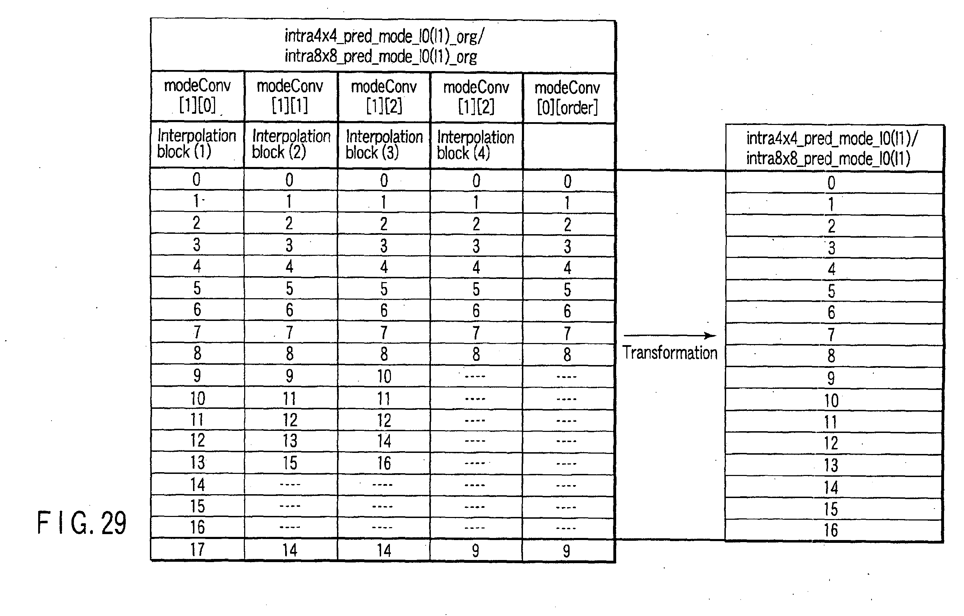

When $4 \times 4$ pixelblocks indicated by a block index :order are to be predicted, as shown in FIG. 28, intra4x4_pred_mode_10_org[block_order_flag][order] is transformed into intra4x4_pred mode_10[order]. This is a process which is performed because usable prediction modes change depending on block_order_flag and positions of the $4 \times 4$ pixelblocks in the macroblock. More specifically, as shown in FIG. 29, when block_order_flag is 0 (FALSE),intra4x4_pred_mode_10_org is directly assigned to intra4x4_pred_mode_10. At this time, intra4x4_pred_mode_10 is data representing a specific prediction mode used in prediction of the 4x4 pixelblocks in prediction modes of nine types of the unidirectional prediction.

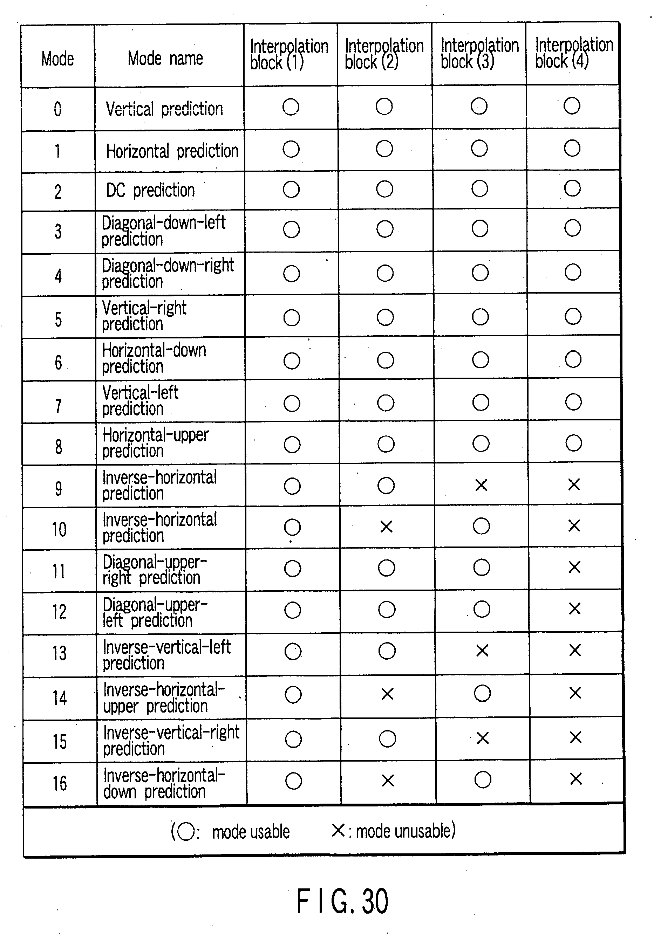

On the other hand, when block_order_flag is 1 (TRUE: extrapolation/interpolation block prediction), tables are switched depending on positions of $4 \times 4$ pixelblocks in a macroblock to be encoded. FIG. 30 shows prediction modes which can be used corresponding to the sub-blocks (interpolation blocks (1), (2), and (3), and extrapolation block (4)) shown in FIG. 13B and names of the prediction modes when left, upper, upper-right, and upper-left macroblocks adjacent to the macroblock to be encoded can be referred to.

As is apparent from FIG. 30, the interpolation block (1) can use all the 17 modes, and the interpolation blocks (2) and (3) cannot use some of the modes. For this reason, as shown in FIG. 28, intra4x4_pred_mode_10_org[block_order_flag][order] is transformed into intra4x4_pred_mode_10 by mode Conv[][] to remove an unusable prediction mode in advance, so that the efficiency of entropy encoding (described later) is improved. As a concrete transformation example, when a prediction mode of the interpolation block (2) is mode 15 (inverse vertical right prediction), "13" is assigned to intra4x4_pred_mode_10. When a prediction mode of the interpolation block (3) is mode 14 (inverse horizontal upper prediction), "12" is assigned to intra4x4_pred_mode_10.

When intra4x4_pred_mode_10 is to be encoded, since the numbers of states of usable modes change depending on block_order_flag and block positions, entropy encoding (Huffman encoding, Golomb encoding, or arithmetic encoding) is performed depending on positions of the $4 \times 4$ pixelblocks to be encoded. The number of states which can be taken by concrete symbols is shown in FIG. 30. The above is the description of the syntax related to encoding of intra4x4_pred_mode_10_org.

When intra4x4_bi_pred_flag is TRUE, intra4x4_pred_mode_11_org is further encoded. With respect to encoding of intra4x4_pred_mode_11_org, a process which is almost the same as that in case of intra4x4_pred_mode_10_org is performed.

First, intra4x4_pred_mode_11_org is transformed into intra4x4_pred_mode_11 according to mode Conv[][] to entropy-encode intra4x4_pred_mode_11 by a variable-length code depending on bock_order_flag and order. Since intra4x4_pred_mode_11 and intra4x4_pred_mode_10 cannot have the same prediction mode, the number obtained by subtracting 1 from the number of states of intra4x4_pred_mode_10 is the number of states of symbols which can be taken by intra4x4_pred_mode_11. On the basis of the number of states, entropy encoding is performed.

As another example, intra4x4(8x8)_pred_mode_10_org and intra4x4(Bx8)_pred_mode_11_org may be entropy-encoded without being transformed by using mode Cony[][]. The above is the details of the syntaxes.

In this case, block_order_flag and intra4x4_bi_pred_flag may be encoded, multiplexed into encoding streams, and then transmitted. On the other hand, without performing the multiplexing and the transmission, information of block_order_flag and intra4x4_bi_pred_flag may be expressed by the activity information calculated from the encoded blocks and pixels. In this case, also on the decoding side, by using the same logic as that on the encoding side, as the information of block_order_flag and intra4x4_bi_pred_flag, the same information as that on the encoding side is shown.

In the $8 \times 8$ pixel prediction, as shown in FIG. 27, the same syntax as that in the $4 \times 4$ pixel prediction is used. For this reason, the description of the $8 \times 8$ pixel prediction will be omitted.

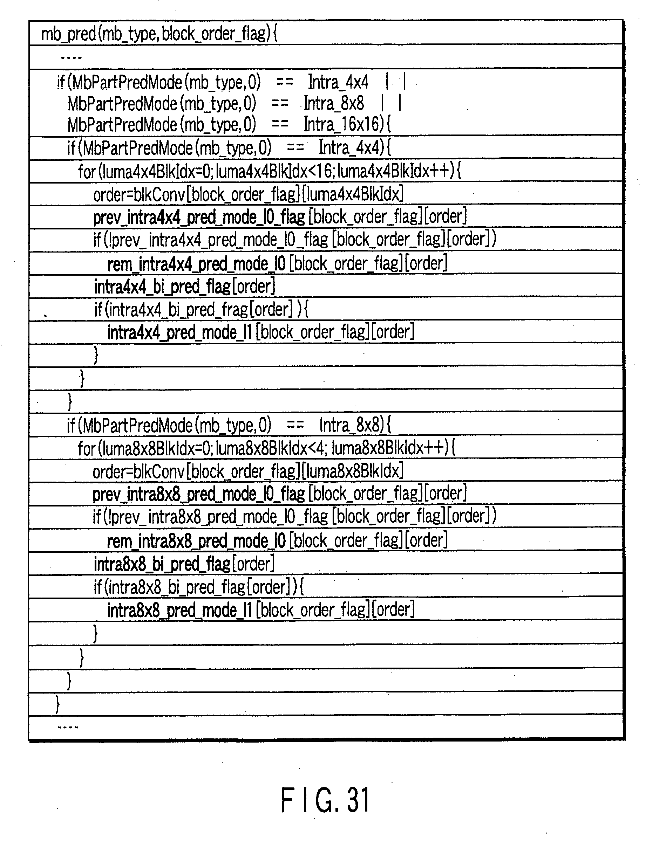

As another example, intra4x4_pred_mode_10_org may be encoded by using a correlation to intra4x4_pred mode_10_org in an adjacent block. A concrete syntax configuration is shown in FIG. 31. The configuration of the macroblock prediction syntax shown in FIG. 27 is replaced with the configuration shown in FIG. 31. In FIG. 31, prev_intra4x4_pred_mode_10_flag[block_order_flag] [order] is a flag representing whether a prediction mode ref_pred_mode_org of list 0 calculated from a reference block (described later) is equal to a prediction mode intra4x4_pred_mode_10_org [block_order_flag][order] of list 0 of the block.

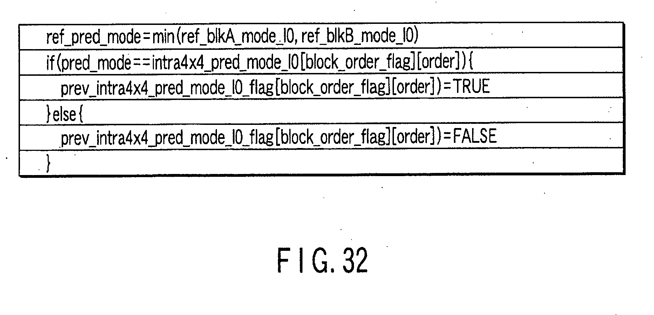

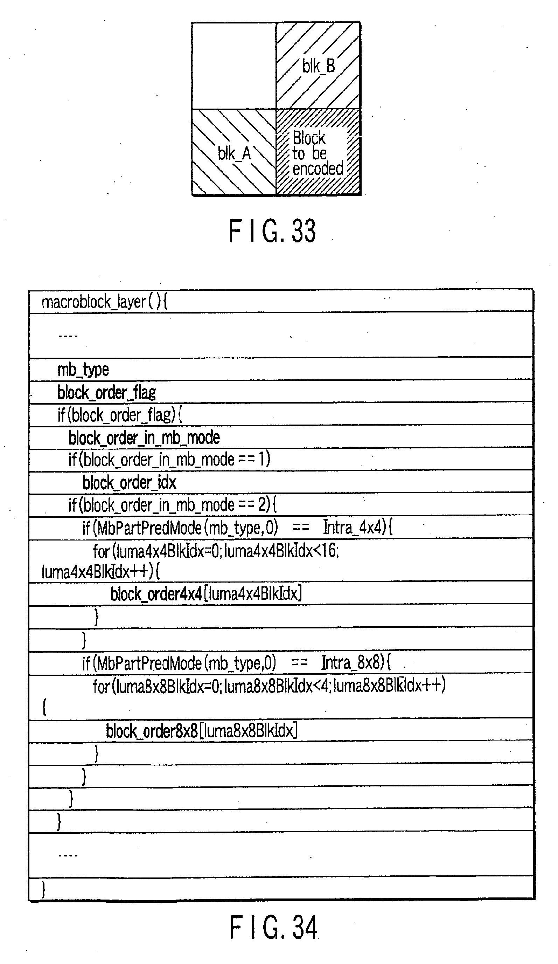

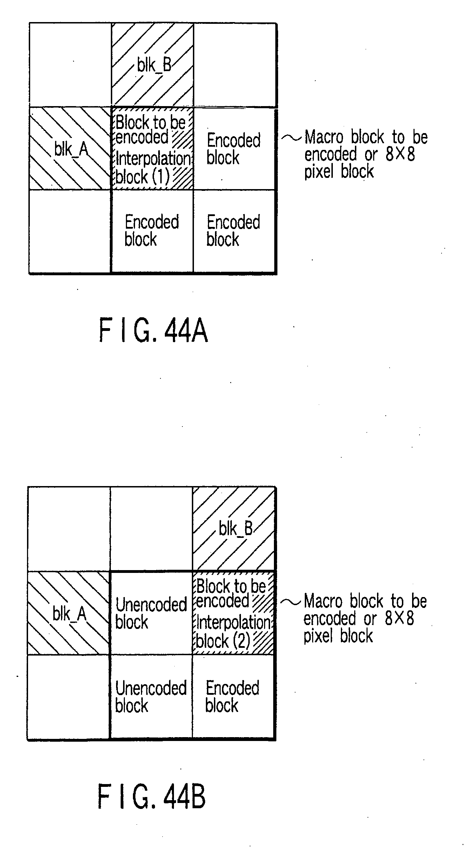

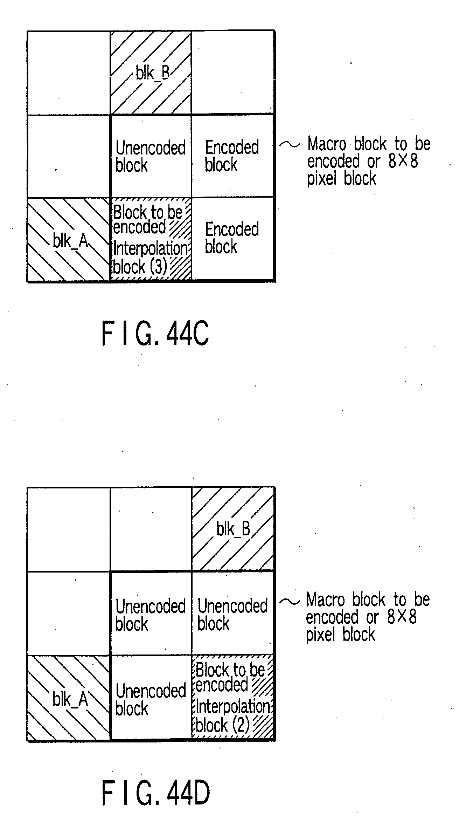

FIG. 32 shows a method of deriving prev_intra4x4_pred_mode_10_flag[block_order_flag] [order]. In this case, ref__blkA_mode_10 in FIG. 32 denotes a prediction mode of list 0 of a nearest encoded block blkA located on the left of the block blkA, and ref_blkB_mode_10 denotes a prediction mode of list 0 of a nearest encoded block located on the upper side of the block blkB. The positions of ref_blkA_mode_10 and ref_blkB_mode_10 change depending on block_order_flag. More specifically, the positions are shown in FIGS. 33, 44A, 44B, 44C, and 44D. When block_order_flag is FALSE, blkA and blkB are left and upper encoded blocks adjacent to the block (FIG. 33). On the other hand, when the flag is TRUE, the blocks blkA and blkB are left and upper encoded blocks nearest to the block blkA and blkB (FIGS. 44A, 44B, 44C, and 44D).

When prev_intra4x4_pred_mode_10_flag[block_order_flag][order ] is TRUE, information of intra4x4_pred_mode_10_org can be expressed by 1 bit by using a correlation to an adjacent block. For this reason, encoding efficiency is improved.

On the other hand, when prev_intra4x4_pred_mode_10_flag[block_order_flag][order ] is FALSE, as a prediction mode of list 0 except for prev_intra4x4_pred_mode_10_flag[block_order_flag][order ], rem_intra4x4_pred_mode_10[block_order_flag][order] is shown. This is data expressing a specific prediction mode of prediction modes except ref_pred_mode_org from rem_intra4x4_pred_mode_10_[block_order_flag][order]. The data is entropy-encoded on the basis of the number of states except ref_pred_mode_org from the symbols which can be taken in a prediction mode of list 0.

In the $8 \times 8$ pixel prediction, as shown in FIG. 31, the same syntax as that in the 4x4 pixel prediction is performed. For this reason, a description of the $8 \times 8$ pixel prediction will be omitted.

The syntax structure as described above is arranged to improve encoding efficiency even in encoding in a prediction mode.

(Second Example of Syntax Structure)

FIG. 34 shows another example of the syntax structure used in the image encoder 100. Necessary syntax information is the macroblock layer syntax 208 in FIG. 25. In this case, a configuration of a macroblock layer syntax shown in FIG. 26 is replaced with a configuration shown in FIG. 34. Syntaxes will be described below.

Block_order_flag which is shown in a macroblock layer syntax in FIG. 34 is a flag representing whether switching of prediction orders is performed by the macroblock. When block_order_flag is TRUE, the prediction orders are switched to perform extrapolation/interpolation block prediction. On the other hand, when block_order_flag is FALSE, block prediction is performed without switching the prediction orders. A concrete method of describing a prediction order when block_order_flag is TRUE is shown in block_order_in_mb_mode. Block_order_in_mb_mode shows a prediction order as follows.

When the prediction mode is mode 0, a prediction order of the extrapolation/interpolation block prediction described in the first embodiment is given. When the prediction mode is mode 1, a combination of prediction orders is converted into an index, and a prediction order is expressed by index information. When a prediction order is to be determined for four blocks, one of 23 combinations of prediction orders except raster block prediction from 24 combinations (= 4P4) is determined for each macroblock by a permutation. More specifically, block_order_idx in FIG. 34 gives the block combination index. When the prediction mode is mode 2, an order number is directly shown on each block. With respect to 4x4 pixelblocks, the order numbers are shown on 16 block_order4x4[BLK]. With respect to $8\times8$ pixelblocks, the order numbers are shown on 4 block_order8x8[BLK].

The above syntax structure can have the following modifications.

(a) When block_order_in_mb_mode is 1, only one block which is encoded first may be shown.
(b) Since the number of indexes of a prediction order is enormous in the $4\times4$ pixel prediction, the prediction order of the 4x4 pixels shown in units of 8x8 pixelblocks may be repeated four times to reduce the information of the indexes.
(c) When block_prder_in_mb_mode is 2, block_order4x4[BLK] may be shown by an external table, or a difference between the block_order4x4[BLK] and an adjacent block_order4x4[] may be expressed by a variable code length.
(d) Since the last block_order4x4[15] is one remaining prediction order, block_order4x4[15] need not be shown. The same is applied to the $8\times8$ pixelblocks. In the 4x4 pixel prediction, a prediction order of the $4\times4$ pixelblocks shown in units of $8\times8$ pixelblocks may be repeated four times to reduce information of block_order4x4.
(e) Values of information such as block_order_in_mb_mode, block_order_idx, block_order4x4, and block_order8x8 may be adaptively set in units of sequences, pictures, slices, or macroblocks.

(Third Example of Syntax Structure)

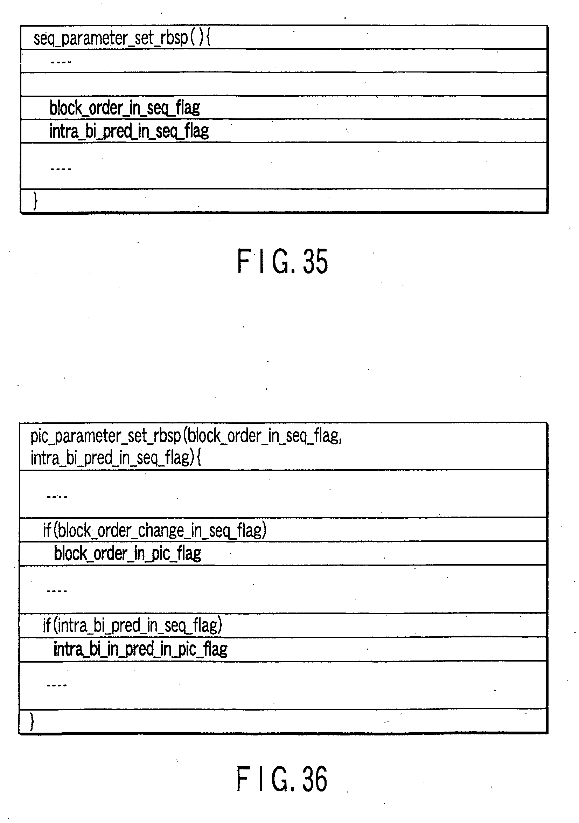

FIGS. 35, 36, 37, 38, and 39 show still another example of the syntax structure used in the image encoder 100. The syntax information required in this example includes a sequence parameter set syntax 702, a picture parameter set syntax 703, a slice header syntax 705, and a macroblock layer syntax 708 in FIG. 25. Syntaxes shown in FIGS. 35, 36, 37, 38, and 39 are added to the syntax structure of the first example. The syntaxes will be described below.

Block_order_in_seq_flag shown in the sequence parameter set syntax in FIG. 35 is a flag representing whether switching of prediction orders is made possible in a sequence. When block_order_in_seq_flag is TRUE, the prediction orders can be switched in the sequence. On the other hand, when block_order_in_seq_flag is FALSE, prediction orders cannot be switched in the sequence.

Block_order_in_pic_flag shown in the picture parameter set syntax in FIG. 36 is a flag representing whether switching of the prediction orders is made possible in the picture. When block_order_in_pic_flag is TRUE, the prediction orders can be switched in the picture. On the other hand, when block_order_in_pic_flag is FALSE, the prediction orders cannot be switched in the picture.

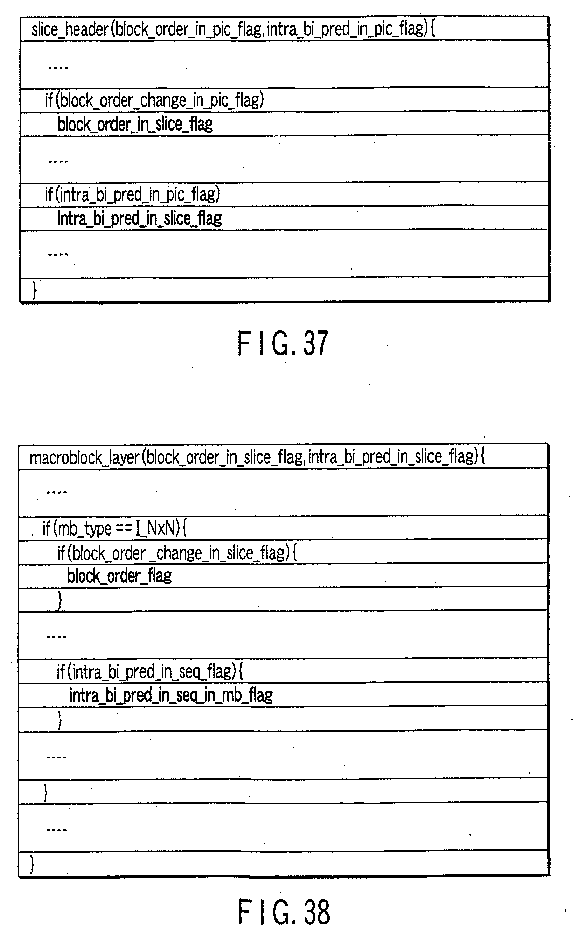

Block_order_in_slice_flag shown in the slice header syntax in FIG. 37 is a flag representing whether switching of the prediction orders is made possible in the slice. When block_order_in_slice_flag is TRUE, the prediction orders can be switched in the slice. On.the other hand, when block_order_in_slice_flag is FALSE, the prediction orders cannot be switched in the slice.

Block_order_flag shown in the macroblock layer syntax in FIG. 38 is a flag representing whether switching of the prediction orders is performed in the macroblock. When block_order_flag is TRUE, the prediction orders are switched to perform extrapolation/interpolation block prediction. On the other hand, when block_order_flag is FALSE, the prediction orders are not switched to perform prediction raster block prediction. Block_order_flag is effective when block_order_in_slice_flag is TRUE and can be used only when the prediction type of the macroblock is the intra-frame prediction.

Intra_bi_pred_in_seq_flag shown in the sequence parameter set syntax in FIG. 35 is a flag representing whether bidirectional prediction can be performed in the sequence. When intra_bi_pred in_seq_flag is TRUE, the bidirectional prediction can be performed in the sequence. On the other hand, when intra_bi_pred_in_seq_flag is FALSE, the bidirectional prediction cannot be performed in the sequence.

Intra_bi_pred_in_pic_flag shown in the picture parameter set syntax in FIG. 36 is a flag representing whether the bidirectional prediction can be performed in the picture. When intra_bi_pred_in_pic_flag is TRUE, the bidirectional prediction can be performed in the picture. On the other hand, when intra_bi_pred_in_pic_flag is FALSE, the bidirectional prediction cannot be performed in the picture.

Intra_bi_pred_in_slice_flag shown in the slice header syntax in FIG. 37 is a flag showing whether the bidirectional prediction can be performed in the slice. When intra_bi_pred_in_slice_flag is TRUE, the bidirectional prediction can be performed in the slice. On the other hand, when intra_bi_pred_in_slice_flag is FALSE, the bidirectional prediction cannot be performed in the slice.

Intra_bi_pred_in_mb_flag shown in the macroblock layer syntax in FIG. 38 is a flag representing whether the bidirectional prediction can be performed in the macroblock. When intra_bi_pred_in_mb_flag is TRUE, the bidirectional prediction can be performed in the macroblock. On the other hand, when intra_bi_pred_in_mb_flag is FALSE, the bidirectional prediction cannot be performed in the macroblock.

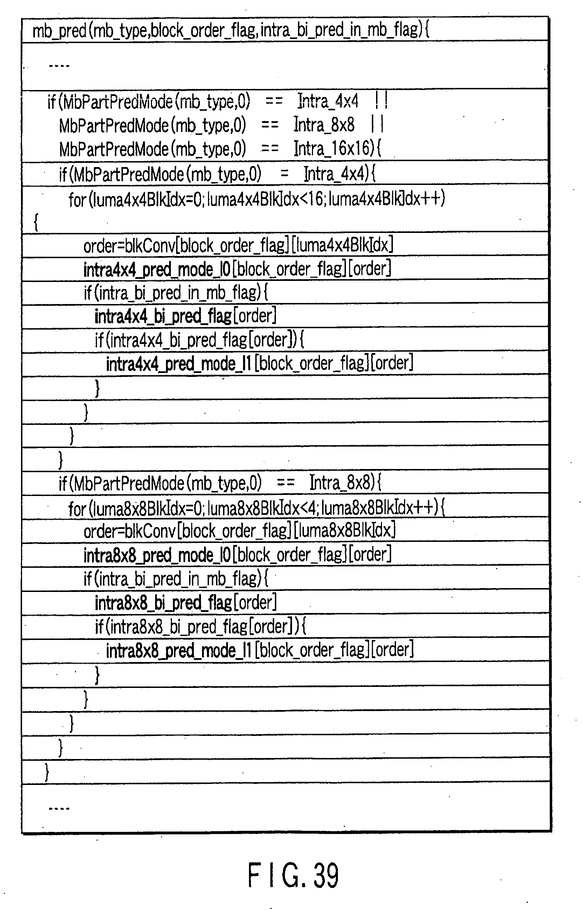

Intra4x4_bi_pred_flag shown in the macroblock prediction syntax in FIG. 39 is a flag representing whether the bidirectional prediction is performed in the prediction block. When intra4x4_bi_pred_flag is TRUE, the bidirectional prediction is performed in the prediction block. On the other hand, when intra4x4_bi_pred_flag is FALSE, the bidirectional prediction is not performed in the macroblock. Intra4x4_bi_pred_flag is effective only when intra_bi_pred_in_mb_flag is TRUE and can be used only when a prediction type of the macroblock is the intra-frame prediction. An initial value of the syntax is set as FALSE.

<About Image Decoding Apparatus>

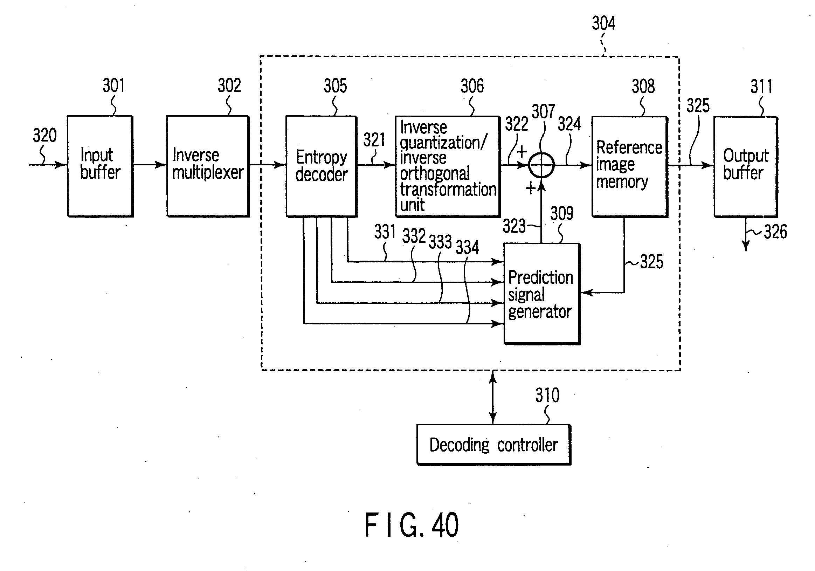

To an image decoding apparatus according to an embodiment of the present invention shown in FIG. 40, an encoding bit stream 320 transmitted from an image encoding apparatus (not shown) (for example, the image encoding apparatus in FIG. 1) and sent through a transmission system or a storage system is input. The encoding bit stream 320 is temporarily stored in an input buffer 901, separated by an inverse multiplexer 302 in units of frames on the basis of a syntax, and then input to a decoder 304. The decoder 304 has an entropy decoder 305, an inverse quantization/inverse orthogonal transformation unit 306, an adder 307, a reference image memory 308, and a prediction signal generator 309.

In the decoder 304, the encoding bit stream separated by the inverse multiplexer 302 is input to an entropy decoder 303. In the entropy decoder 303, according to the syntax structure shown in FIG. 25, code strings are entropy-decoded to a high-level syntax, a slice-level syntax, and a macro-block-level syntax of the encoding bit stream, respectively.

In this manner, from the entropy decoder 303, in addition to quantization transformation coefficient information 321 and quantization parameter information, information (the prediction mode index information, the block size switching information, the prediction order switching information, and the prediction mode number switching information are generally called prediction mode information hereinafter) such as prediction mode index information 331, block size switching information 332, prediction order switching information 333 and prediction mode number switching information 334 which are related to prediction modes are output. The quantization transformation coefficient information 321 is information obtained by orthogonal-transforming and quantizing a prediction residual error signal. The quantization parameter information includes information such as a quantization width (quantization step size) and quantization matrix.

The quantization transformation coefficient information 321 is inversely quantized by the inverse quantization/inverse orthogonal transformation unit 306 according to a decoded quantization parameter and further subjected to inverse orthogonal transformation such as IDCT. In this case, the inverse orthogonal transformation is described. However, when wavelet transformation or the like is performed on the encoding side, the inverse quantization/inverse orthogonal transformation unit 306 may perform corresponding inverse quantization/inverse wavelet transformation or the like.

A prediction residual error signal 322 is output from the inverse quantization/inverse orthogonal transformation unit 306 and input to the adder 307. In the adder 307, a prediction signal 323 output from the prediction signal generator 309 and the prediction residual error signal 322 are added to each other to generate a decoded image signal 324. The decoded image signal 324 is input to the reference image memory 308, given to an output buffer 311, and output from the output buffer 311 at a timing of management by a decoding controller 310.

On the other hand, the prediction mode index information 331, the block size switching information 332, the prediction order switching information 333, and the prediction mode number switching information 334 decoded by the entropy decoder 305 are input to the prediction signal generator 309. To the prediction signal generator 309, a decoded reference image signal 325 is further input from the reference image memory 308. The prediction signal generator 309 generates the prediction signal 323 with reference to the reference image signal 325 on the basis of the prediction mode index information 331, the block size switching information 332, the prediction order switching information 333, and the prediction mode number switching information 334. The decoding controller 310 performs control of an entire decoding process of the decoder 304, for example, control of an input buffer 301 and the output buffer 311, control of a decoding timing, and the like.

<About Prediction Signal Generating Unit 309>

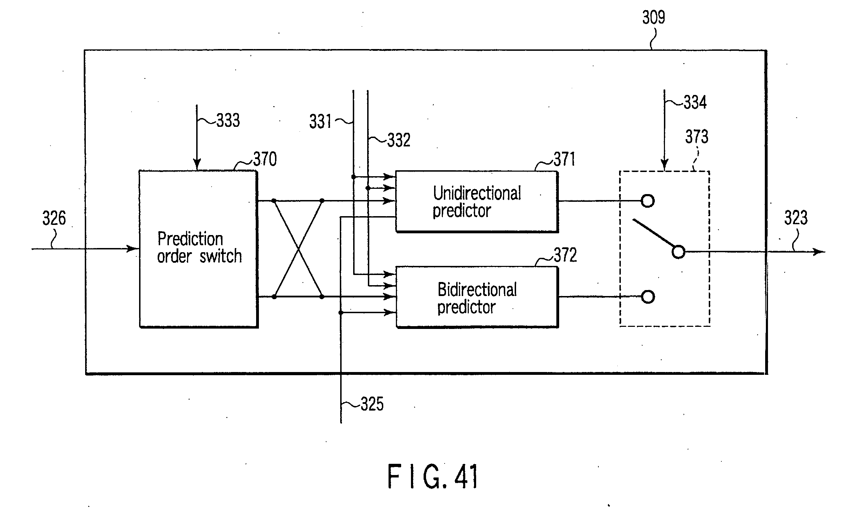

The prediction signal generator 309 will be described below with reference to FIG. 41. The prediction signal generator 309 shown in FIG. 41 is basically the same as the prediction signal generator 113 in the image encoding apparatus described above. In FIG. 41, a prediction order switch 370 switches prediction orders of sub-blocks in a macroblock to the reference image signal 325 from the reference image memory 308 on the basis of the prediction order switching information 333. The image signal the prediction order of which is switched by the prediction order switch 370 is input to a unidirectional predictor 371 and a bidirectional predictor 372.

The unidirectional predictor 371 selects one prediction mode from a plurality of prepared prediction modes on the basis of the prediction mode index information 331 and generates a prediction signal with reference to the reference image signal 325 according to the selected prediction mode and the block size switching information 332. The bidirectional predictor 372 selects two prediction modes of the plurality of prepared prediction modes on the basis of the prediction mode index information 331 and generates a prediction signal with reference to the reference image signal 325 according to the selected prediction modes and the block size switching information 332. The prediction signals output from the unidirectional predictor 371 and the bidirectional predictor 372 are input to a prediction mode number switch 373. In this case, the prediction modes regulate a manner of referring to decoded pixels when a prediction signal of a sub-block is generated.

The prediction mode number switch 373 is controlled according to the prediction mode number switching information 334 to select any one of the prediction signal generated by the unidirectional predictor 371 and the prediction signal generated by the bidirectional predictor 372 to output the selected prediction signal 323.

The prediction order switch 370 is controlled by the prediction order switching information 333 and switches prediction orders of sub-blocks by transforming the index :blk serving as a reference by a value of :block_order_flag (described later) expressing the prediction order switching information 333. To an order :idx of sub-blocks, an index : order (expressing a prediction order) of a sub-block in actual encoding is as expressed in Equation (3). A transformation table to transform blockConv[][] is as shown in FIG. 8.

When a flag :block_order_flag is 0 (FALSE), an index :order of a sub-block in actual predictive encoding is an index :idx itself of a sub-block to be encoded, and prediction of a block and a prediction order are not changed (such prediction by the prediction order is called sequential prediction hereinafter). FIGS. 6B and 7B show prediction orders obtained by sequential predictions to FIGS. 6A and 7A, respectively.

On the other hand, when the flag :block_order_flag is 1 (TRUE), an index :order of a sub-block in actual predictive encoding shows a prediction order in which a diagonal block of four sub-blocks is predicted first by extrapolation and the three remaining blocks are predicted by extrapolation prediction or interpolation. The prediction performed in the prediction order is called extrapolation/interpolation prediction hereinafter. FIGS. 6C and 7C show changes in prediction order by extrapolation/interpolation predictions to FIGS. 6A and 7A, respectively.

As described above, the sub-blocks the prediction orders of which are switched by the prediction order switch 370 are input to the unidirectional predictor 371 or the bidirectional predictor 372 to generate prediction signals corresponding to the sub-blocks. The prediction mode number switch 373 outputs a prediction signal obtained by the unidirectional predictor 371 when the prediction mode number switching information 334 indicates a prediction mode number "1", and outputs a prediction signal obtained by the bidirectional predictor 372 when the prediction mode number switching information 334 indicates a prediction mode number "2". The prediction signal output from the prediction mode number switch 373 is extracted as an output 323 from the prediction signal generator 309.

The prediction mode number switch 373 is controlled according to the prediction mode number switching information 334 given in units of prediction blocks ($4 \times 4$ pixelblocks or $8 \times 8$ pixelblocks) to output the prediction signal 323. More specifically, in case of $4 \times 4$ pixel prediction, intra4x4_bi_pred_flag is described in units of $4 \times 4$ pixelblocks.

More specifically, the prediction mode number switch 373 selects the prediction signal obtained by the unidirectional predictor 371 when a flag :intra4x4_bi_pred_flag serving as the prediction mode number switching information 334 is FALSE, and selects the prediction signal obtained by the bidirectional predictor 372 when intra_4x4_bi_pred_flag is TRUE.

Since concrete processes of the unidirectional predictor 371 and the bidirectional predictor 372 are the same as those in the unidirectional predictor 171 and the bidirectional predictor 172 in the image encoding apparatus, a description thereof will be omitted.

A syntax structure is basically as shown in FIG. 19. However, a configuration of a macroblock prediction syntax used when 4x4 pixel prediction is selected will be described below with reference to FIG. 27.

BlkConv[block_order_flag][luma4x4BlkIdx] in FIG. 27 has a transformation table which transforms a prediction order as shown in FIG. 8 and outputs an index of a block to be decoded. Intra4x4_pred_mode_l0[block_order_flag]

[order] is data of the decoded index.

Intra4x4_bi_pred_flag in FIG. 27 is a flag which switches between a state in which the bidirectional prediction is performed to the 4x4 pixelblock and a state the bidirectional prediction is not performed to the 4×4 pixelblock. More specifically, the flag intra4x4_bi_pred_flag which is FALSE means that the unidirectional prediction is performed to the 4x4 pixelblocks. The flag which is TRUE means that the bidirectional prediction is performed to the 4x4 pixelblocks.

Intra4x4_pred_mode_11 in FIG. 27 is data of a decoded index. The data intra4x4_pred_mode_11 is decoded when intra4x4_bi_pred_flag is TRUE.

Details of the syntaxes will be given below.

Luma4x4Blk is transformed in units of block_order_flag according to a table shown in blkConv[block_order_flag][luma4x4BlkIdx] to calculate a block index :order indicating a sub-block to be encoded (FIG. 8).

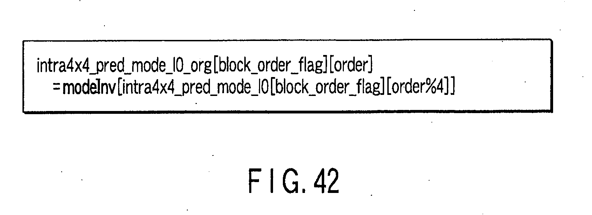

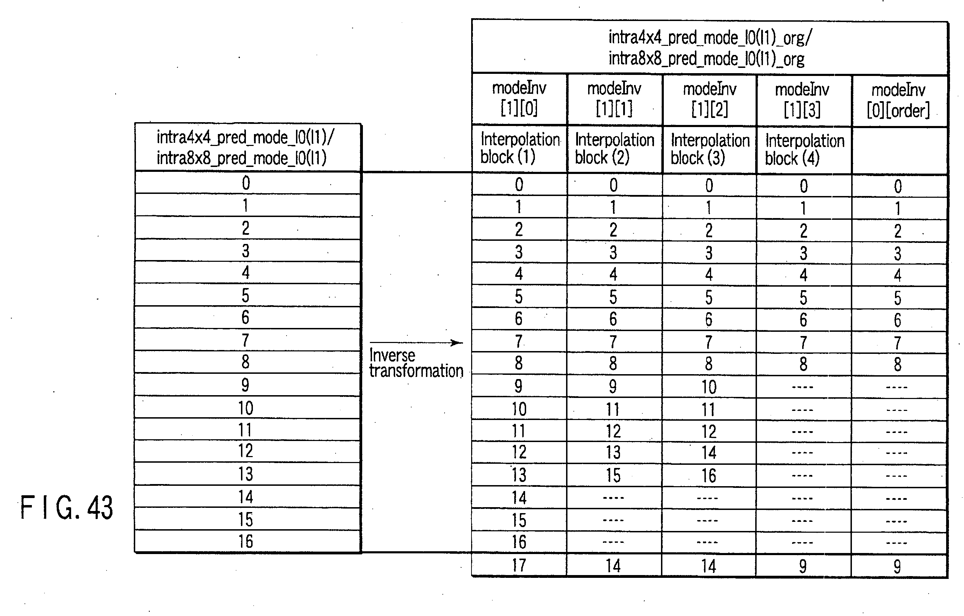

When 4×4 pixelblocks indicated by the block index order are to be decoded, intra4x4_pred_mode_10[block_order_flag][order] is decoded and inverse-transformed into intra4x4_pred_mode_10_org[block_order_flag][order] as shown in FIG. 42. This process is performed because usable prediction modes change depending on block_order_flag and positions of the blocks in the macroblock. More specifically, as shown in FIG. 43, when block_order_flag is 0 (FALSE), a value of intra4x4_pred_mode_10 is directly assigned to intra4x4_pred_mode_10_org. At this time, intra4x4_pred_mode_10_org is data indicating a prediction mode which is selected from the prepared prediction modes of nine types of the unidirectional prediction and which is used in decoding of the 4×4 pixelblocks.

On the other hand, when block_order_flag is 1 (TRUE :extrapolation/interpolation block prediction), tables are switched depending on positions at which the 4×4 pixelblocks are located in a macroblock. More specifically, when intra4x4_pred_mode_10[1][order] decoded to the interpolation block (2) is 13, the prediction mode intra4x4_pred_mode_10_org[1][order] becomes 15 (inverse vertical right prediction). When intra4x4_pred_mode_10[1][order] decoded to the interpolation block (3) is 12, the prediction mode intra4x4_pred_mode_10_org[1][order] becomes 14 (inverse horizontal upper prediction).

When intra4x4_bi_pred_flag is TRUE, intra4x4_pred_mode_11[block_order_flag][order] is decoded. The decoded intra4x4_pred_mode_10[block_order_flag][order] is transformed into intra4x4_pred_mode_10_org[block_order_flag][order] as shown in FIG. 43.

In another embodiment, information of block_order_flag and intra4x4_bi_pred_flag is separated from the encoded bit stream and decoded. However, information of block_order_flag and intra4x4_bi_pred_flag may be shown by the activity information calculated by decoded blocks and pixels. In this case, by using the same logic as that on the encoding side, the same information as that on the encoding side is shown as information of block_order_flag and intra4x4_bi_pred_flag. For this reason, the separation from the encoded bit stream and the decoding process are not necessary.

As still another example, intra4x4_pred_mode_10_org may be encoded by using a correlation to intra4x4_pred_mode_10_org in an adjacent block. A concrete syntax structure is shown in FIG. 31, and a configuration of the macroblock prediction syntax shown in FIG. 27 is replaced with that in FIG. 31. Prev_intra4x4_pred_mode_10_flag[block_order_flag][order ] in FIG. 31 is a flag representing whether a prediction mode ref_pred_mode_org of list 0 calculated from a reference block (described later) is equal to a prediction mode intra4x4_pred_mode_10_org[block_order_flag][order] of list 0 of a target block.

FIG. 32 shows a method of deriving prev_intra4x4_pred_mode_10_flag[block_order_flag][order ]. In this case, ref_blkA_mode_10 in FIG. 32 denotes a prediction mode of list 0 of a nearest encoded block blkA located on the left of the block blkA. Ref_blkB_mode_10 denotes a prediction mode of list 0 of a nearest encoded block located on the upper side of the block blkB.

The positions of ref_blkA_mode_10 and ref_blkB_mode_10 change depending on block_order_flag, more specifically, are shown in FIGS. 33, 44A, 44B, 44C, and 44D. When block_order_flag is FALSE, blkA and blkB serve as left and upper decoded blocks adjacent to a target block (FIG. 33). On the other hand, when block_order_flag is TRUE, ref_blkA and ref_blkB serve as left and upper decoded blocks nearest to the target block (FIGS. 44A, 44B, 44C, and 44D).

When prev_intra4x4_pred_mode_10_flag[block_order_flag][order ] is TRUE, information of intra4x4_pred_mode_10_org is shown with 1 bit by using a correlation between the target block and an adjacent block.

On the other hand, when prev_intra4x4_pred_mode_10_flag[block_order_flag][order ] is FALSE, as a prediction mode of list 0 except for prev_intra4x4_pred_mode_10_flag[block_order_flag][order ], rem_intra4x4_pred_mode_10[block_order_flag][order] is shown. Data representing a prediction mode selected from prediction modes except ref_pred_mode_org from rem_intra4x4_pred_mode_10[block_order_flag][order] is decoded on the basis of the number of states except ref_pred_mode_org from symbols which can be taken according to the prediction mode of list 0.

With respect to the 8×8 pixel prediction, the same syntax as that used in the 4×4 pixel prediction is used as shown in FIG. 27. For this reason, a description of the 8×8 pixel prediction will be omitted.

An image encoding apparatus according to another embodiment will be described below with focus on parts different from those in the above description. Block_order_flag shown in the macroblock layer syntax in FIG. 33 is a flag representing whether switching of prediction orders is performed. When block_order_flag is TRUE, the prediction orders are switched to perform extrapolation/interpolation block prediction. On the other hand, when block_order_flag is FALSE, raster block prediction is performed without switching the prediction orders.

When block_order_flag is TRUE, a concrete method of describing a prediction order is shown by block_order_in_mb_mode. Block_order_in_mb_mode shows a prediction order according.to the following manner.

(a) When the mode is 0, a prediction order used when extrapolation/interpolation block prediction is performed is given.

(b) When the mode is 1, a combination of prediction orders is converted into index information, and a prediction order is shown by the index information. When a prediction order is determined to four blocks, one of 23 combinations of the prediction orders except the raster block prediction from 4P4 = 24 combinations obtained is determined by permutation for each macroblock. Specifically, block_order_idx in FIG. 33 gives the block combination index.

(c) When the mode is 2, an order number is directly shown on each block. With respect to $4\times4$ pixelblocks, the order numbers are shown on 16 block_order4x4[BLK]. With respect to $8\times8$ pixelblocks, the order numbers are shown on four block_order8x8[BLK].

As another example, when block_order_in_mb_mode is 1, only one block to be decoded first may be shown. In the $4\times4$ pixel prediction, the number of indexes of prediction orders is enormous. For this reason, the order of the $4\times4$ pixelblocks shown in units of $8\times8$ pixelblocks may be repeated four times to reduce the information of the indexes.

When block_order_in_mb_mode is 2, block_order4x4[BLK] may be shown by an external table. A difference between block_order4x4[BLK] and adjacent block_order4x4[] may be calculated, and block_order4x4[BLK] may be expressed by a variable code length. Since the last block_order4x4[15] is one remaining order, block_order4x4[15] need not be shown. The same can be applied to the 8x8 pixelblocks. In the $4\times4$ pixel prediction, the order of the $4\times4$ pixelblocks shown in units of 8x8 pixelblocks may be repeated four times to reduce information of block_order4x4.

To information such as block_order_in_mb_mode, block_order_idx, block_order4x4, and block_order8x8, values may be adaptively set in units of sequence, pictures, slices, and macroblocks.

According to one embodiment of the present invention, a prediction order is made selectable, so that not only extrapolation using a correlation to, for example, a left or upper pixel, but also interpolation effectively using a correlation to a right or lower pixel can be performed. Since the number of usable prediction modes can be selected, for example, bidirectional prediction which calculates prediction signals obtained in a plurality of prediction modes in units of pixels is selected to make it possible to realize high prediction efficiency to a complex texture. Furthermore, prediction order switching information or prediction mode selection number information can be encoded such that the pieces of information are adaptively switched in units of sequences, pictures, slices, macroblocks, or sub-blocks. Therefore, image encoding having high encoding efficiency and decoding of the encoded image can be realized.

An image encoding process and an image decoding process based on the embodiment described above can be realized by hardware. However, the processes can also be performed by executing software by using a computer such as a personal computer. Therefore, according to this viewpoint, an image encoding program, an image decoding program, or a computer readable storage medium in which the programs are stored which are used to cause a computer to execute at least one of the image encoding process and the image decoding process can also be provided.

The present invention is not directly limited to the above embodiments. In an execution phase, the invention can be embodied by changing the constituent elements without departing from the spirit and scope of the invention. Various inventions can be formed by appropriate combinations of the plurality of constituent elements disclosed in the embodiments. For example, several constituent elements may be removed from all the constituent elements described in the embodiments. Furthermore, the constituent elements of the different embodiments may be appropriately combined to each other.

Industrial Applicability

The present invention can be used in a high-efficiency compression encoding/decoding technique of a moving image or a still image.

**Claims**

1. An image encoding method for performing predictive encoding for each of a plurality of pixelblocks obtained by dividing a frame of an input image signal, comprising:

selecting a prediction order of a plurality of sub-blocks obtained by dividing the pixelblock from a plurality of predetermined prediction orders;

selecting, from a plurality of prediction modes which regulate a manner of referring to an encoded pixel when a first prediction signal of each sub-block (no antecedent basis) is generated for the encoded pixel, the number of prediction modes used in prediction of the first prediction signal;

selecting prediction modes of the number of selected prediction modes from the plurality of prediction modes to use in prediction of the first prediction signal;

generating the first prediction signal in the selected prediction order by using the number of selected prediction modes to generate a second prediction signal corresponding to the pixelblock; and

encoding a prediction residual error signal expressing a difference between an image signal of the pixelblock and the second prediction signal to generate encoded data obtained by the predictive encoding.

2. An image encoding apparatus which performs predictive encoding for each of a plurality of pixelblocks obtained by dividing a frame of an input image signal, comprising:

a first selector which selects a prediction order of a plurality of sub-blocks obtained by dividing the pixelblock from a plurality of predetermined prediction orders;

a second selector which selects, from a plurality of prediction modes which regulate a manner of referring to an encoded pixel when a first prediction signal of each sub-block is generated for the encoded pixel, the number of prediction modes used in prediction of the first prediction signal;

a third selector which selects prediction modes of the number selected prediction modes from the plurality of prediction modes to use in prediction of the first prediction signal;

a generator which generates the second prediction signal by using the first prediction signal corresponding to the pixelblock in the selected prediction order by using the number of selected prediction modes; and

an encoder which encodes a prediction residual error signal expressing a difference between an image signal of the pixelblock and the second prediction signal to generate encoded data obtained by the predictive encoding.

3. The image encoding apparatus according claim 2, wherein
the image encoding apparatus is configured to perform the predictive encoding by using at least one of intra-frame prediction and inter-frame prediction.

4. The image encoding apparatus according to claim 2, wherein
the first selector selects the prediction order for each of the pixelblocks.

5. The image encoding apparatus according to claim 2, wherein
the first selector selects any one of a first prediction order and a second prediction order for each of the pixelblocks.

6. The image encoding apparatus according to claim 2, wherein
the first selector is configured to control whether the prediction orders are selected by being switched for each of the pixelblocks.

7. The image encoding apparatus according to claim 2, wherein
the first selector is configured to control for each of the pixelblocks whether any one of the first prediction order and the second prediction order is selected.

8. The image encoding apparatus according to claim 2, wherein
the encoder is configured to encode information representing the selected prediction order to generate the encoded data.

9. The image encoding apparatus according to claim 2, wherein
at least one of the prediction modes is a spatial directional prediction mode which refers to the encoded pixel in a specific direction defined by the input image signal.

10. The image encoding apparatus according to claim 2, wherein
the predictor has a first predictor which predicts, when a prediction mode is selected from the plurality of prediction modes, the pixelblock according to the selected prediction order and the selected prediction mode, and a second predictor which predicts, when at least two prediction modes are selected from the plurality of prediction modes, the pixelblock according to the selected prediction order and the at least two selected prediction modes to generate a plurality of prediction signals and the second prediction signal by combining the prediction signals for each pixel.

**11.** The image encoding apparatus according to claim 10, wherein
the second predictor is configured to perform a combination of the pixel units by at least one of (a) a weighted average, (b) a maximum value filter, (c) a minimum value filter, (d) a median filter, and (e) an angle of the directional prediction which refers to the encoded pixel with respect to a specific spatial direction defined by the input image signal or a table in which weighting factors depending on the number of the selected prediction modes are described.

**12.** The image encoding apparatus according to claim 2, wherein
the encoder is configured to encode information representing the number of selected prediction modes to generate the encoded data.

**13.** The image encoding apparatus according to claim 2, wherein
the first selector is configured to select the prediction order according to activity information of the pixelblock or adjacent pixelblocks.

**14.** The image encoding apparatus according to claim 2, wherein
the first selector is configured to select the prediction order according to activity information of the pixelblock or adjacent pixelblocks, and
the encoder is configured to also encode information representing the selected prediction order to generate the encoded data.

**15.** The image encoding apparatus according to claim 2, wherein
the second selector is configured to select the number of prediction modes used in prediction of the first prediction signal according to activity information of the pixelblock or adjacent pixelblocks.

**16.** The image encoding apparatus according to claim 2, wherein
the second selector is configured to select the number of prediction modes used in prediction of the first prediction signal depending on activity information of the pixelblock or an adjacent pixelblock, and
the encoder is configured to also encode information representing the number of selected prediction modes to generate the encoded data.

**17.** An image decoding method for decoding encoded data for each of a plurality of pixelblocks obtained by dividing a frame of an input image signal, comprising:

selecting a prediction order of a plurality of sub-blocks obtained by dividing the pixelblock from a plurality of predetermined prediction orders;
selecting, from a plurality of prediction modes which regulate a manner of referring to an encoded pixel when a first prediction signal of each sub-block is generated for a decoded pixel, a number of prediction modes used in prediction of the first prediction signal;
selecting prediction modes of the number of selected prediction modes from the plurality of prediction modes to use in prediction of the first prediction signal;
generating the first prediction signal in the selected prediction order by using the number of selected prediction modes to generate a second prediction signal corresponding to the pixelblock; and
generating a decoded image signal by using the second prediction signal.

**18.** An image decoding apparatus which decodes encoded data for each of a plurality of pixelblocks obtained by dividing a frame of an input image signal, comprising:

a first selector which selects a prediction order of a plurality of sub-blocks obtained by dividing the pixelblock from a plurality of predetermined prediction orders;
a second selector which selects, from a plurality of prediction modes which regulate a manner of referring to an encoded pixel when a first prediction signal of each sub-block is generated for a decoded pixel, a number of prediction modes used in prediction of the first prediction signal;
a third selector which selects prediction modes of the number of selected prediction modes from the plurality of prediction modes to use in prediction of the first prediction signal;
a generator which generates the first prediction signal in the selected prediction order by using the number of selected prediction modes to generate a second prediction signal corresponding to the pixelblock; and
a generator which generates a decoded image signal by using the second prediction signal.

**19.** The image encoding apparatus according to claim 18, wherein
the first selector selects the prediction order for each of the pixelblocks.

**20.** The image encoding apparatus according to claim 18, wherein
the first selector selects any one of a first prediction order and a second prediction order for each of the pixelblocks.

**21.** The image encoding apparatus according to claim 18, wherein
the first selector is configured to control whether the prediction orders are selected by being switched for each of the pixelblocks.

**22.** The image encoding apparatus according to claim 18, wherein
the first selector is configured to control for each of the pixelblocks whether any one of the first prediction order and the second prediction order is selected.

**23.** The image encoding apparatus according to claim 18, further comprising
a separation unit which separates first information, included in the encoded data, representing a prediction order of a plurality of sub-blocks obtained by dividing the pixelblock,
wherein the first selector is configured to select a prediction order indicated by the first information.

**24.** The image encoding apparatus according to claim 18, wherein
at least one of the prediction modes is a directional prediction mode which refers to the decoded pixel in a specific spatial direction in a space defined by the image signal.

**25.** The image encoding apparatus according to claim 18, wherein
the predictor has a first predictor which predicts, when a prediction mode is selected from the plurality of prediction modes, the pixelblock according to the selected prediction order and the selected prediction mode, and a second predictor which predicts, when at least two prediction modes are selected from the plurality of prediction modes, the pixelblock according to the selected prediction order and the at least two selected prediction modes to generate a plurality of prediction signals and a prediction signal corresponding to the pixelblock by combining the prediction signals in units of pixels.

**26.** The image encoding apparatus according to claim 25, wherein
the second predictor is configured to perform a combination of the pixel units by at least one of (a) a weighted average, (b) a maximum value filter, (c) a minimum value filter, (d) a median filter, and (e) an angle of the directional prediction which refers to the encoded pixel with respect to a specific direction in a space defined by the input image signal or a table in which weighting factors depending on the number of the selected prediction modes are described.

**27.** The image encoding apparatus according to claim 18, further comprising
a separation unit which separates second information, included in the encoded data, representing the number of prediction modes used in prediction of the first prediction signal,
wherein the second selector is configured to select the number of prediction modes indicated by the second information.

**28.** The image encoding apparatus according to claim 18, wherein
the first selector is configured to select the prediction order according to activity information of the pixelblock or an adjacent pixelblock.

**29.** The image encoding apparatus according to claim 18, further comprising
a separation unit which separates first information, included in the encoded data, representing a prediction order of a plurality of sub-blocks obtained by dividing the pixelblock,
wherein the first selector is configured to select the prediction order according to at least one of the first information and activity information of the pixelblock or an adjacent pixelblock.

**30.** The image encoding apparatus according to claim 18, wherein
the second selector is configured to select the number of prediction modes used in prediction of the first prediction signal according to activity information of the pixelblock or an adjacent pixelblock.

**31.** The image encoding apparatus according to claim 18, further comprising

a separation unit which separates second information, included in the encoded data, representing the number of prediction modes used in prediction of the first prediction signal,

wherein the second selector is configured to select the number of prediction modes used in prediction of the first prediction signal depending on at least one of the second information and activity information of the pixelblock or an adjacent pixelblock.

32. A computer readable storage medium having stored therein an image encoding program which causes a computer to perform image encoding including predictive encoding for each of a plurality of pixelblocks obtained by dividing a frame of an input image signal, the program comprising:

means for causing the computer to select a prediction order of a plurality of sub-blocks obtained by dividing the pixelblock from a plurality of predetermined prediction orders;

means for causing the computer to select, from a plurality of prediction modes which regulate a manner of referring to an encoded pixel when a first prediction signal of each sub-block is generated for the encoded pixel, the number of prediction modes used in prediction of the first prediction signal;

means for causing the computer to select prediction modes of the number selected prediction modes from the plurality of prediction modes to use in prediction of the first prediction signal;

means for causing the computer to generate the first prediction signal in the selected prediction order by using the number of selected prediction modes to generate a second prediction signal corresponding to the pixelblock; and

means for causing the computer to encode a prediction residual error signal expressing a difference between an image signal of the pixelblock and the second prediction signal to generate encoded data obtained by the predictive encoding.

33. A computer readable storage medium having stored therein an image decoding program which causes a computer to perform image decoding including decoding of encoded data for each of a plurality of pixelblocks obtained by dividing a frame of an image signal, the program comprising:

means for causing the computer to select a prediction order of a plurality of sub-blocks obtained by dividing the pixelblock from a plurality of predetermined prediction orders;

means for causing the computer to select, from a plurality of prediction modes which regulate a manner of referring to an encoded pixel when a first prediction signal of the each sub-block is generated for a decoded pixel, a number of prediction modes used in prediction of the first prediction signal;

means for causing the computer to select prediction modes of the number of the selected prediction modes from the plurality of to use in prediction of the first prediction signal;

means for causing the computer to generate the first prediction signal in the selected prediction order by using the selected prediction modes to generate a second prediction signal corresponding to the pixelblock; and

means for causing the computer to generate a decoded image signal by using the second prediction signal.

F I G. 1

EP 2 056 606 A1

Encoded block
(region)

Encoding block

F I G. 2A

16 pixels

16 pixels

F I G. 2B

8 pixels

8 pixels

F I G. 3A

4 pixels

4 pixels

F I G. 3B

4 pixels　　8 pixels

4 pixels

F I G. 3C

FIG.4

F I G. 5

EP 2 056 606 A1

FIG. 6A

FIG. 6B

FIG. 6C

FIG. 6D

4 pixels

4 pixels

| 0 | 1 | 4 | 5 |
| 2 | 3 | 6 | 7 |
| 8 | 9 | 12 | 13 |
| 10 | 11 | 14 | 15 |

F I G. 7A

Sixteenth  Fifteenth   Eighth  Seventh  Sixth   Fifth   Fourth   Third   Second   First   Prediction order

| 15 | 14 | ---- | 7 | 6 | 5 | 4 | 2 | 2 | 1 | 0 |

F I G. 7B

Sixteenth  Fifteenth   Eighth  Seventh  Sixth   Fifth   Fourth   Third   Second   First   Prediction order

| 15 | 14 | ---- | 4 | 6 | 5 | 7 | 0 | 2 | 1 | 3 |

F I G. 7C

Sixteenth  Fifteenth   Eighth  Seventh  Sixth   Fifth   Fourth   Third   Second   First   Prediction order

| 14 | 13 | ---- | 0 | 8 | 4 | 12 | 3 | 11 | 7 | 5 |

F I G. 7D

| idx | blkConv[0] [idx] | blkConv[1] [idx] |
|-----|------------------|------------------|
| 0 | 0 | 3 |
| 1 | 1 | 1 |
| 2 | 2 | 2 |
| 3 | 3 | 0 |
| 4 | 4 | 7 |
| 5 | 5 | 5 |
| 6 | 6 | 6 |
| 7 | 7 | 4 |
| 8 | 8 | 11 |
| 9 | 9 | 9 |
| 10 | 10 | 10 |
| 11 | 11 | 8 |
| 12 | 12 | 15 |
| 13 | 13 | 13 |
| 14 | 14 | 14 |
| 15 | 15 | 12 |

FIG.8

FIG. 9A

FIG. 9B

F I G. 9C

F I G. 9D

FIG. 10

| Mode index | Unidirectional prediction name |
|---|---|
| 0 | Vertical prediction |
| 1 | Horizontal prediction |
| 2 | DC prediction |
| 3 | Diagonal-down-left prediction |
| 4 | Diagonal-down-right prediction |
| 5 | Vertical-right prediction |
| 6 | Horizontal-down prediction |
| 7 | Vertical-left prediction |
| 8 | Horizontal-upper prediction |

| Mode index | Bidirectional prediction name | Mode index | Bidirectional prediction name |
|---|---|---|---|
| 01 | Vertical/horizontal prediction | 26 | DC/horizontal-down prediction |
| 02 | Vertical/DC prediction | 27 | DC/vertical-left prediction |
| 03 | Vertical/diagonal-down-left prediction | 28 | DC/horizontal-upper prediction |
| 04 | Vertical/diagonal-down-right prediction | 34 | Diagonal-down-left/orthogonal lower-right prediction |
| 05 | Vertical/right prediction | 35 | Diagonal-down-left/vertical-down-right prediction |
| 06 | Vertical/horizontal-down prediction | 36 | Diagonal-down-left/horizontal-down prediction |
| 07 | Vertical/vertical-left prediction | 37 | Diagonal-down-left/vertical-left prediction |
| 08 | Vertical/horizontal-upper prediction | 38 | Diagonal-down-left/horizontal-upper prediction |
| 12 | Horizontal/DC prediction | 45 | Diagonal-down-right/vertical-right prediction |
| 13 | Horizontal/diagonal-down-left prediction | 46 | Diagonal-down-right/horizontal-down prediction |
| 14 | Horizontal/diagonal-down-right prediction | 47 | Diagonal-down-right/vertical-left prediction |
| 15 | Horizontal/vertical-right prediction | 48 | Diagonal-down-right/horizontal-upper prediction |
| 16 | Horizontal/horizontal-down prediction | 56 | Vertical-right/horizontal-down prediction |
| 17 | Horizontal/vertical-left prediction | 57 | Vertical-right/vertical-left prediction |
| 18 | Horizontal/horizontal-upper prediction | 58 | Vertical-right/horizontal-upper prediction |
| 23 | DC/diagonal-down-left prediction | 67 | Horizontal-down/vertical left prediction |
| 24 | DC/diagonal-down-right prediction | 68 | Horizontal-down/horizontal-upper prediction |
| 25 | DC/vertical-right prediction | 78 | Vertical-left/horizontal-upper prediction |

FIG. 11

F I G. 12A

F I G. 12B

| | | | |
|---|---|---|---|
| Coded region | | | |
| | Interpolation block (1) | Interpolation block (2) | |
| | | | —— Unencoded region —— |
| | Interpolation block (3) | Extrapolation block (4) | |

F I G. 13A

| | | | | | | | |
|---|---|---|---|---|---|---|---|
| Unencoded region | | | | | | | |
| | Inter- polation block (1) | Inter- polation block (2) | Inter- polation block (1) | Inter- polation block (2) | | | |
| | Inter- polation block (3) | Extra- polation block (4) | Inter- polation block (3) | Extra- polation block (4) | | —— Unencoded region —— | |
| | Inter- polation block (1) | Inter- polation block (2) | Inter- polation block (1) | Inter- polation block (2) | | | |
| | Inter- polation block (3) | Extra- polation block (4) | Inter- polation block (3) | Extra- polation block (4) | | | |

F I G. 13B

| Z | A | B | C | D | E | F | G | H | I | J | K | L | M | N | O | P |
|---|---|---|---|---|---|---|---|---|---|---|---|---|---|---|---|---|
| Q | | | | | | | | | | | | | | | | |
| R | | Unencoded block | | | | Unencoded block | | | | | | | | | | |
| S | | | | | | | | | | | | | | | | |
| T | | | | | | | | | | | | | | | | |
| U | | | | | a | b | c | d | | | | | | | | |
| V | | Unencoded block | | | e | f | g | h | | | | | | | | |
| W | | | | | i | j | k | l | | | | | | | | |
| X | | | | | m | n | o | p | | | | | | | | |

F I G. 14A

| Z | A | B | C | D | E | F | G | H | I | J | K | L | M | N | O | P |
|---|---|---|---|---|---|---|---|---|---|---|---|---|---|---|---|---|
| Q | | | | | a | b | c | d | | | | | | | | |
| R | | Unencoded block | | | e | f | g | h | | | | | | | | |
| S | | | | | i | j | k | l | | | | | | | | |
| T | | | | | m | n | o | p | | | | | | | | |
| U | | | | | RA | RB | RC | RD | | | | | | | | |
| V | | Unencoded block | | | | Encoded block | | | | | | | | | | |
| W | | | | | | | | | | | | | | | | |
| X | | | | | | | | | | | | | | | | |

F I G. 14B

FIG. 14C

FIG. 14D

F I G. 15A

F I G. 15B

F I G. 16

| Mode index | Unidirectional prediction name |
|---|---|
| 00 | Vertical prediction |
| 01 | Horizontal prediction |
| 02 | DC prediction |
| 03 | Diagonal-down-left prediction |
| 04 | Diagonal-down-right prediction |
| 05 | Vertical-right prediction |
| 06 | Horizontal-down prediction |
| 07 | Vertical-left prediction |
| 08 | Horizontal-upper prediction |
| 09 | Inverse-vertical prediction |
| 10 | Inverse-horizontal prediction |
| 11 | Diagonal-upper-right prediction |
| 12 | Diagonal-upper-left prediction |
| 13 | Inverse-vertical-left prediction |
| 14 | Inverse-horizontal-upper prediction |
| 15 | Inverse-vertical-right prediction |
| 16 | Inverse-horizontal-down prediction |

# F I G. 17

F I G. 18A

F I G. 18B

F I G. 18C

F I G. 18D

F I G. 19A

F I G. 19B

F I G. 20A

F I G. 20B

F I G. 21A

F I G. 21B

F I G. 21C

| Mode index | Bidirectional prediction name | Mode index | Bidirectional prediction name |
|---|---|---|---|
| 0001 | Vertical/horizontal prediction | ----- | -------- |
| 0002 | Vertical/DC prediction | 1015 | Inverse-horizontal/inverse-vertical-right prediction |
| 0003 | Vertical/diagonal-down-left prediction | 1016 | Inverse-horizontal/inverse-horizontal-down prediction |
| 0004 | Vertical/diagonal-down-right prediction | 1112 | Diagonal-upper-right/diagonal-upper-left prediction |
| 0005 | Vertical/right prediction | 1113 | Diagonal-upper-right/inverse-vertical left prediction |
| 0006 | Vertical/horizontal-down prediction | 1114 | Diagonal-upper-right/inverse-horizontal-upper prediction |
| 0007 | Vertical/vertical-left prediction | 1115 | Diagonal-upper-right/inverse-vertical-right prediction |
| 0008 | Vertical/horizontal-upper prediction | 1116 | Diagonal-upper-right/inverse-horizontal-down prediction |
| 0009 | Vertical/inverse-vertical prediction | 1213 | Diagonal-upper-left/inverse-vertical-left prediction |
| 0010 | Vertical/inverse-horizontal prediction | 1214 | Diagonal-upper-left/inverse-horizontal-upper prediction |
| 0011 | Vertical/diagonal-upper-right prediction | 1215 | Diagonal-upper-left/inverse-vertical-right prediction |
| 0012 | Vertical/diagonal-upper-left prediction | 1216 | Diagonal-upper-left/inverse-horizontal-down prediction |
| 0013 | Vertical/inverse-vertical-left prediction | 1314 | Inverse-vertical-left/inverse-horizontal-upper prediction |
| 0014 | Vertical/inverse-horizontal-upper prediction | 1315 | Inverse-vertical-left/inverse-vertical-right prediction |
| 0015 | Vertical/inverse-vertical-right prediction | 1316 | Inverse-vertical-left/inverse-horizontal-down prediction |
| 0016 | Vertical/ inverse-horizontal-down prediction | 1415 | Inverse-horizontal-upper/inverse-vertical-right prediction |
| 0102 | Horizontal/DC prediction | 1416 | Inverse-horizontal-upper/inverse-horizontal down prediction |
| ----- | ------------------- | 1516 | Inverse-horizontal-down/inverse-horizontal down prediction |

## F I G. 22

Start

Load 1 frame ~S101

Start encoding of macro block ~S102

~S103
No ← Has prediction order changed ? → Yes

Yes ← ~S104 Unidirectional prediction ? → No

Yes ← ~S104 Unidirectional prediction ? → No

Raster block unidirectional prediction

Raster block bidirectional prediction

Extrapolation/ interpolation block unidirectional prediction

Extrapolation/ interpolation block bidirectional prediction

~S106 Prediction process

~S107 Prediction process

S108~ Prediction process

S109~ Prediction process

~S111 Calculate total cost (1) in macro block

~S112 Calculate total cost (2) in macro block

~S113 Calculate total cost (3) in macro block

~S114 Calculate total cost (4) in macro block

Determine prediction method by comparing total costs (1) to (4) with each other ~S115

Perform transformation, quantization, and entropy encoding by determined prediction method ~S116

~S117
Has 1-frame encoding ended ? → No

Yes

F I G. 23

```
                    ┌──────────────────────────┐
                    │         blk=0             │─── S201
                    └──────────────────────────┘
                                 │
                                 ▼
                    ┌──────────────────────────┐
                    │   index=0,min_cost=∞      │─── S202
                    └──────────────────────────┘
                                 │
                                 ▼
                    ┌──────────────────────────┐
                    │ Generate prediction image │─── S203
                    └──────────────────────────┘
                                 │
                                 ▼
                    ┌──────────────────────────┐
                    │  Calculate encoding cost  │─── S204
                    └──────────────────────────┘
                                 │
                                 ▼   S205
                            ◇─────────────◇        No
                           ◇ cost<min_cost ◇─────────
                            ◇      ?       ◇
                            ◇─────────────◇
                                 │ Yes
                                 ▼
                    ┌──────────────────────────┐
                    │     best_mode=index,      │
                    │      min_cost=cost,       │─── S206
                    │   Store prediction image  │
                    └──────────────────────────┘
                                 │
                                 ▼   S207
                            ◇─────────────◇        No
                           ◇ idx++,idx>MAX ◇─────────
                            ◇      ?       ◇
                            ◇─────────────◇
                                 │ Yes
                                 ▼
                    ┌──────────────────────────┐
                    │  Perform transformation,  │
                    │  quantization, and entropy │─── S208
                    │   encoding by best_mode   │
                    └──────────────────────────┘
                                 │
                                 ▼   S209
                            ◇──────────────────◇    Yes
                           ◇ blk++,blk>BLK_MAX  ◇────────
                            ◇        ?          ◇
                            ◇──────────────────◇
                                 │ Yes
                                 ▼
```

# F I G. 24

Start

High-level syntax ~201

Sequence parameter set syntax ~202

Picture parameter set syntax ~203

Slice-level syntax ~204

Slice header syntax ~205

Slice data syntax ~206

Macro-block-level syntax ~207

Macro block layer syntax ~208

Macro block prediction syntax ~209

F I G. 25

| macroblock_layer( ) { |
| --- |
| .... |
| mb_type |
| block_order_flag |
| .... |
| } |

F I G. 26

```
mb_pred(mb_type,block_order_flag){
    ....
    if(MbPartPredMode(mb_type,0)   ==   Intra_4x4  | |
       MbPartPredMode(mb_type,0)   ==   Intra_8x8  | |
       MbPartPredMode(mb_type,0)   ==   Intra_16x16){
        if(MbPartPredMode(mb_type,0)   ==   Intra_4x4){
            for(luma4x4BlkIdx=0; luma4x4BlkIdx<16; luma4x4BlkIdx++){
                order=blkConv[block_order_flag][luma4x4BlkIdx]
                intra4x4_pred_mode_l0[block_order_flag][order]
                intra4x4_bi_pred_flag[order]
                if(intra4x4_bi_pred_frag[order]){
                    intra4x4_pred_mode_l1[block_order_flag][order]
                }
            }
        }

        if(MbPartPredMode(mb_type,0)   ==   Intra_8x8){
            for(luma8x8BlkIdx=0; luma8x8BlkIdx<4; luma8x8BlkIdx++){
                order=blkConv[block_order_flag][luma8x8BlkIdx]
                intra8x8_pred_mode_l0[block_order_flag][order]
                intra8x8_bi_pred_flag[order]
                if(intra8x8_bi_pred_frag[order]){
                    intra8x8_pred_mode_l1[block_order_flag][order]
                }
            }
        }
    }
    ....
```

FIG. 27

```
intra4x4_pred_mode_l0 [block_order_flag] [order]
    =modeConv [intra4x4_pred_mode_l0_org [block_order_flag] [order%4] ]
```

FIG. 28

EP 2 056 606 A1

**F I G. 29**

| intra4x4_pred_mode_l0(l1)_org/ intra8x8_pred_mode_l0(l1)_org | | | | | | intra4x4_pred_mode_l0(l1)/ intra8x8_pred_mode_l0(l1) |
|---|---|---|---|---|---|---|
| modeConv [1][0] | modeConv [1][1] | modeConv [1][2] | modeConv [1][2] | modeConv [0][order] | | |
| Interpolation block (1) | Interpolation block (2) | Interpolation block (3) | Interpolation block (4) | | | |
| 0 | 0 | 0 | 0 | 0 | | 0 |
| 1 | 1 | 1 | 1 | 1 | | 1 |
| 2 | 2 | 2 | 2 | 2 | | 2 |
| 3 | 3 | 3 | 3 | 3 | | 3 |
| 4 | 4 | 4 | 4 | 4 | | 4 |
| 5 | 5 | 5 | 5 | 5 | | 5 |
| 6 | 6 | 6 | 6 | 6 | | 6 |
| 7 | 7 | 7 | 7 | 7 | | 7 |
| 8 | 8 | 8 | 8 | 8 | | 8 |
| 9 | 9 | 10 | ---- | ---- | | 9 |
| 10 | 11 | 11 | ---- | ---- | | 10 |
| 11 | 12 | 12 | ---- | ---- | | 11 |
| 12 | 13 | 14 | ---- | ---- | | 12 |
| 13 | 15 | 16 | ---- | ---- | | 13 |
| 14 | ---- | ---- | ---- | ---- | | 14 |
| 15 | ---- | ---- | ---- | ---- | | 15 |
| 16 | ---- | ---- | ---- | ---- | | 16 |
| 17 | 14 | 14 | 9 | 9 | | |

Transformation →

| Mode | Mode name | Interpolation block (1) | Interpolation block (2) | Interpolation block (3) | Interpolation block (4) |
|---|---|---|---|---|---|
| 0 | Vertical prediction | O | O | O | O |
| 1 | Horizontal prediction | O | O | O | O |
| 2 | DC prediction | O | O | O | O |
| 3 | Diagonal-down-left prediction | O | O | O | O |
| 4 | Diagonal-down-right prediction | O | O | O | O |
| 5 | Vertical-right prediction | O | O | O | O |
| 6 | Horizontal-down prediction | O | O | O | O |
| 7 | Vertical-left prediction | O | O | O | O |
| 8 | Horizontal-upper prediction | O | O | O | O |
| 9 | Inverse-horizontal prediction | O | O | X | X |
| 10 | Inverse-horizontal prediction | O | X | O | X |
| 11 | Diagonal-upper-right prediction | O | O | O | X |
| 12 | Diagonal-upper-left prediction | O | O | O | X |
| 13 | Inverse-vertical-left prediction | O | O | X | X |
| 14 | Inverse-horizontal-upper prediction | O | X | O | X |
| 15 | Inverse-vertical-right prediction | O | O | X | X |
| 16 | Inverse-horizontal-down prediction | O | X | O | X |
| (O: mode usable    X: mode unusable) | | | | | |

F I G. 30

```
mb_pred(mb_type,block_order_flag){
    ....
    if(MbPartPredMode(mb_type,0)  ==  Intra_4x4  | |
      MbPartPredMode(mb_type,0)  ==  Intra_8x8  | |
      MbPartPredMode(mb_type,0)  ==  Intra_16x16){
        if(MbPartPredMode(mb_type,0)  ==  Intra_4x4){
            for(luma4x4BlkIdx=0;luma4x4BlkIdx<16;luma4x4BlkIdx++){
                order=blkConv[block_order_flag][luma4x4BlkIdx]
                prev_intra4x4_pred_mode_l0_flag[block_order_flag][order]
                if(!prev_intra4x4_pred_mode_l0_flag[block_order_flag][order])
                    rem_intra4x4_pred_mode_l0[block_order_flag][order]
                intra4x4_bi_pred_flag[order]
                if(intra4x4_bi_pred_frag[order]){
                    intra4x4_pred_mode_l1[block_order_flag][order]
                }
            }
        }
        if(MbPartPredMode(mb_type,0)  ==  Intra_8x8){
            for(luma8x8BlkIdx=0;luma8x8BlkIdx<4;luma8x8BlkIdx++){
                order=blkConv[block_order_flag][luma8x8BlkIdx]
                prev_intra8x8_pred_mode_l0_flag[block_order_flag][order]
                if(!prev_intra8x8_pred_mode_l0_flag[block_order_flag][order])
                    rem_intra8x8_pred_mode_l0[block_order_flag][order]
                intra8x8_bi_pred_flag[order]
                if(intra8x8_bi_pred_flag[order]){
                    intra8x8_pred_mode_l1[block_order_flag][order]
                }
            }
        }
    }
    ....
```

FIG. 31

60

```
ref_pred_mode=min(ref_blkA_mode_l0, ref_blkB_mode_l0)
if(pred_mode==intra4x4_pred_mode_l0[block_order_flag][order]){
    prev_intra4x4_pred_mode_l0_flag[block_order_flag][order])=TRUE
}else{
    prev_intra4x4_pred_mode_l0_flag[block_order_flag][order])=FALSE
}
```

F I G. 32

F I G. 33

```
macroblock_layer(){

    ----

    mb_type
    block_order_flag
    if(block_order_flag){
        block_order_in_mb_mode
        if(block_order_in_mb_mode == 1)
            block_order_idx
        if(block_order_in_mb_mode == 2){
            if(MbPartPredMode(mb_type,0)  ==  Intra_4x4){
                for(luma4x4BlkIdx=0;luma4x4BlkIdx<16;
luma4x4BlkIdx++){
                    block_order4x4[luma4x4BlkIdx]
                }
            }
            if(MbPartPredMode(mb_type,0)  ==  Intra_8x8){
                for(luma8x8BlkIdx=0;luma8x8BlkIdx<4;luma8x8BlkIdx++)
{
                    block_order8x8[luma8x8BlkIdx]
                }
            }
        }
    }

    ----

}
```

F I G. 34

```
seq_parameter_set_rbsp(){
    ....

    block_order_in_seq_flag
    intra_bi_pred_in_seq_flag

    ....
}
```

## F I G. 35

```
pic_parameter_set_rbsp(block_order_in_seq_flag,
intra_bi_pred_in_seq_flag){

    ....

    if(block_order_change_in_seq_flag)
        block_order_in_pic_flag

    ....

    if(intra_bi_pred_in_seq_flag)
        intra_bi_in_pred_in_pic_flag

    ....
}
```

## F I G. 36

```
slice_header(block_order_in_pic_flag,intra_bi_pred_in_pic_flag){

    ....

    if(block_order_change_in_pic_flag)
        block_order_in_slice_flag

    ....

    if(intra_bi_pred_in_pic_flag)
        intra_bi_pred_in_slice_flag

    ....

}
```

F I G. 37

```
macroblock_layer(block_order_in_slice_flag,intra_bi_pred_in_slice_flag){

    ....

    if(mb_type == I_NxN){
        if(block_order_change_in_slice_flag){
            block_order_flag
        }

        ....

        if(intra_bi_pred_in_seq_flag){
            intra_bi_pred_in_seq_in_mb_flag
        }

        ....

    }

    ....

}
```

F I G. 38

```
mb_pred(mb_type,block_order_flag,intra_bi_pred_in_mb_flag){

    ....

    if(MbPartPredMode(mb_type,0)   ==   Intra_4x4  ||
      MbPartPredMode(mb_type,0)   ==   Intra_8x8  ||
      MbPartPredMode(mb_type,0)   ==   Intra_16x16){
      if(MbPartPredMode(mb_type,0)   =   Intra_4x4){
        for(luma4x4BlkIdx=0;luma4x4BlkIdx<16;luma4x4BlkIdx++)
{
          order=blkConv[block_order_flag][luma4x4BlkIdx]
          intra4x4_pred_mode_l0[block_order_flag][order]
          if(intra_bi_pred_in_mb_flag){
            intra4x4_bi_pred_flag[order]
            if(intra4x4_bi_pred_flag[order]){
              intra4x4_pred_mode_l1[block_order_flag][order]
            }
          }
        }
      }
      if(MbPartPredMode(mb_type,0)   ==   Intra_8x8){
        for(luma8x8BlkIdx=0;luma8x8BlkIdx<4;luma8x8BlkIdx++){
          order=blkConv[block_order_flag][luma8x8BlkIdx]
          intra8x8_pred_mode_l0[block_order_flag][order]
          if(intra_bi_pred_in_mb_flag){
            intra8x8_bi_pred_flag[order]
            if(intra8x8_bi_pred_flag[order]){
              intra8x8_pred_mode_l1[block_order_flag][order]
            }
          }
        }
      }
    }

    ....
```

F I G. 39

F I G. 40

EP 2 056 606 A1

F I G. 41

intra4x4_pred_mode_l0_org[block_order_flag][order]
  = modeInv[intra4x4_pred_mode_l0[block_order_flag][order%4]]

F I G. 42

EP 2 056 606 A1

# FIG. 43

| intra4x4_pred_mode_I0(I1)/<br>intra8x8_pred_mode_I0(I1) |
| --- |
| 0 |
| 1 |
| 2 |
| 3 |
| 4 |
| 5 |
| 6 |
| 7 |
| 8 |
| 9 |
| 10 |
| 11 |
| 12 |
| 13 |
| 14 |
| 15 |
| 16 |

Inverse transformation →

| intra4x4_pred_mode_I0(I1)_org/<br>intra8x8_pred_mode_I0(I1)_org | | | | |
| --- | --- | --- | --- | --- |
| modeInv[1][0] | modeInv[1][1] | modeInv[1][2] | modeInv[1][3] | modeInv[0][order] |
| Interpolation block (1) | Interpolation block (2) | Interpolation block (3) | Interpolation block (4) | |
| 0 | 0 | 0 | 0 | 0 |
| 1 | 1 | 1 | 1 | 1 |
| 2 | 2 | 2 | 2 | 2 |
| 3 | 3 | 3 | 3 | 3 |
| 4 | 4 | 4 | 4 | 4 |
| 5 | 5 | 5 | 5 | 5 |
| 6 | 6 | 6 | 6 | 6 |
| 7 | 7 | 7 | 7 | 7 |
| 8 | 8 | 8 | 8 | 8 |
| 9 | 9 | 10 | ---- | ---- |
| 10 | 11 | 11 | ---- | ---- |
| 11 | 12 | 12 | ---- | ---- |
| 12 | 13 | 14 | ---- | ---- |
| 13 | 15 | 16 | ---- | ---- |
| 14 | ---- | ---- | ---- | ---- |
| 15 | ---- | ---- | ---- | ---- |
| 16 | ---- | ---- | ---- | ---- |
| 17 | 14 | 14 | 9 | 9 |

| | blk_B | |
|---|---|---|
| blk_A | Block to be encoded Interpolation block (1) | Encoded block |
| | Encoded block | Encoded block |

~ Macro block to be encoded or 8×8 pixel block

F I G. 44A

| | | blk_B |
|---|---|---|
| blk_A | Unencoded block | Block to be encoded Interpolation block (2) |
| | Unencoded block | Encoded block |

~ Macro block to be encoded or 8×8 pixel block

F I G. 44B

blk_B

| Unencoded block | Encoded block |
|---|---|
| Block to be encoded Interpolation block (3) | Encoded block |

blk_A

~ Macro block to be encoded or 8×8 pixel block

F I G. 44C

blk_B

| Unencoded block | Unencoded block |
|---|---|
| Unencoded block | Block to be encoded Interpolation block (2) |

blk_A

~ Macro block to be encoded or 8×8 pixel block

F I G. 44D

## INTERNATIONAL SEARCH REPORT

| | |
|---|---|
| International application No. | PCT/JP2006/315039 |

**A. CLASSIFICATION OF SUBJECT MATTER**
*H04N7/32(2006.01)i*

According to International Patent Classification (IPC) or to both national classification and IPC

**B. FIELDS SEARCHED**

Minimum documentation searched (classification system followed by classification symbols)
H04N7/26-7/50

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-260464 A  (Nippon Telegraph And Telephone Corp.), 22 September, 2005 (22.09.05), Par. Nos. [0011] to [0012]; Fig. 20 (Family: none) | 1-33 |
| A | Kenneth K.C.Lee, Marian Choy and Y.K.Chan, Spatial Domain Contribution to a High Compression Efficiency System, International Workshop on Advanced Image Technology 2006 (IWAIT2006), 2006.01.09, p.89-94 | 1-33 |
| A | JP 2004-140473 A  (Sony Corp.), 13 May, 2004 (13.05.04), Full text; Figs. 7, 11 (Family: none) | 1-33 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 October, 2006 (16.10.06) | 24 October, 2006 (24.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 2 056 606 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KENNETH K. C. LEE et al.** Spatial Domain Contribution to a High Compression Efficiency System. *IWAIT2006,* June 2006

- **KENNETH K. C. LEE et al.** Spatial Domain Contribution to a High Compression Efficiency System. *IWAIT 2006,* June 2006